# FASCICULE DE BREVET EUROPEEN

(11) **EP 3 818 135 B1**
(45) Date de publication et mention de la délivrance du brevet: **17.04.2024**
(21) Numéro de dépôt: 19733820.5
(22) Date de dépôt: 02.07.2019
(51) Int. Cl.: C10M 105/38

(54) **UTILISATION ET MÉTHODE POUR REFROIDIR ET LUBRIFIER UN SYSTEME DE PROPULSION D'UN VEHICULE ELECTRIQUE OU HYBRIDE**
VERWENDUNG UND VERFAHREN ZUM KÜHLEN UND SCHMIEREN EINES ANTRIEBSSYSTEMS EINES HYBRID- ODER ELEKTROFAHRZEUGS
USE AND METHOD FOR COOLING AND LUBRICATING A PROPULSION SYSTEM OF Y HYBRDID OR ELECTRICAL VEHICLE

(30) Priorité: 02.07.2018 FR 1856093
(43) Date de publication de la demande: 12.05.2021
(73) Titulaire: TotalEnergies OneTech, 92400 Courbevoie (FR)
(72) Inventeur: CHAMPAGNE, Nicolas, 69300 CALUIRE-ET-CUIRE (FR)
(74) Mandataire: Cabinet Nony
(86) Numéro de dépôt international: PCT/EP2019/067721
(87) Numéro de publication internationale: WO 2020/007853

(56) Documents cités:
- WO-A1-2018/078290
- US-A- 3 003 968
- US-A1- 2012 283 162

## Description

La présente invention concerne le domaine des compositions lubrifiantes pour un système de propulsion d'un véhicule électrique ou hybride. Elle vise ainsi à proposer une composition dotée à la fois de propriétés de lubrification vis-à-vis de la transmission du système de propulsion, de refroidissement de l'électronique de puissance et de la batterie, et des deux propriétés combinées vis-à-vis du moteur dans un système de propulsion d'un véhicule électrique ou hybride.

L'évolution des normes internationales pour la réduction des émissions de CO₂, mais également pour la diminution de la consommation d'énergie, pousse les constructeurs automobiles à proposer des solutions alternatives aux moteurs à combustion.

L'une des solutions identifiées par les constructeurs automobiles consiste à remplacer les moteurs à combustion par des moteurs électriques. Les recherches pour la réduction des émissions de CO₂ ont donc mené au développement des véhicules électriques par un certain nombre de compagnies automobiles.

Par « véhicule électrique » au sens de la présente invention, on entend désigner un véhicule comprenant un moteur électrique comme unique moyen de propulsion à l'inverse d'un véhicule hybride qui comprend un moteur à combustion et un moteur électrique comme moyens de propulsion combinés.

Par « système de propulsion » au sens de la présente invention, on entend désigner un système comprenant les pièces mécaniques nécessaires à la propulsion d'un véhicule électrique. Le système de propulsion englobe ainsi plus particulièrement un moteur électrique, ou l'ensemble rotor-stator de l'électronique de puissance (dédié à la régulation de la vitesse), une transmission et une batterie.

D'une manière générale, il est nécessaire de mettre en oeuvre, dans les véhicules électriques ou hybrides, des compositions pour répondre à la double contrainte de lubrification et de refroidissement des différentes pièces du système de propulsion rappelées ci-dessus.

Pour ce qui est du moteur électrique lui-même, la composition lubrifiante joue un rôle à la fois de lubrification et de refroidissement. Pour ce qui est de l'électronique de puissance, la composition permet le refroidissement. La transmission est lubrifiée par la composition et enfin les batteries sont refroidies par ladite composition.

Une composition telle que définie selon l'invention joue un rôle à la fois de lubrification et de refroidissement.

Les compositions lubrifiantes, dites encore « les lubrifiants », sont communément mises en oeuvre dans les moteurs à des fins principales de réduction des forces de frottement entre les différentes pièces métalliques en mouvement dans les moteurs. Elles sont en outre efficaces pour prévenir une usure prématurée voire un endommagement de ces pièces, et en particulier de leur surface.

Pour ce faire, une composition lubrifiante est classiquement composée d'une ou plusieurs huiles de base, auxquelles sont généralement associés plusieurs additifs dédiés à stimuler les performances lubrifiantes des huiles de base, comme par exemple des additifs modificateurs de frottement.

D'autre part, les systèmes de propulsion électriques génèrent de la chaleur pendant leur fonctionnement *via* le moteur électrique, l'électronique de puissance et les batteries. La quantité de chaleur générée étant supérieure à la quantité de chaleur normalement dissipée à l'environnement, il est nécessaire d'assurer un refroidissement du moteur, de l'électronique de puissance et des batteries. De manière générale, le refroidissement s'effectue sur plusieurs parties du système de propulsion générant de la chaleur et/ou les parties dudit système sensibles à la chaleur, afin d'éviter d'atteindre des températures dangereuses, et notamment l'électronique de puissance et les batteries.

Par ailleurs, et pour des raisons évidentes de sécurité, il est important que le fluide permettant d'assurer le refroidissement d'un système de propulsion électrique présente une inflammabilité réduite.

Traditionnellement, il est connu de refroidir les moteurs électriques par l'air, par l'eau éventuellement associé à du glycol ou encore par jet d'huile.

Le document WO 2011/113851 décrit l'utilisation d'une composition lubrifiante comprenant une huile de base, préférentiellement une polyalphaoléfine (PAO) ou du GTL, pour refroidir un moteur électrique de véhicule hybride ou de véhicule équipé d'un système de récupération de l'énergie cinétique (en langue anglaise « Kinetic Energy Recovery System », ou KERS). En revanche, les compositions décrites étant optimisées pour des moteurs de véhicules hybrides ou de systèmes KERS, elles présenteront des propriétés de refroidissement insuffisantes pour une mise en oeuvre dans un système de motorisation entièrement électrique. En effet, un moteur d'un véhicule électrique est soumis à des sollicitations bien plus importantes qu'un moteur électrique d'un véhicule hybride, de par une fréquence d'utilisation plus élevée, ce qui implique l'utilisation d'une huile avec des propriétés de refroidissement accrues.

On peut encore citer le document JP 2012/184360 qui décrit une composition lubrifiante comprenant une huile de base synthétique et un composé fluoré pour le refroidissement d'un moteur électrique. Cependant, les hydrochlorofluorocarbures présents dans ces compositions sont des gaz organiques ayant un impact négatif important sur la couche d'ozone et sont de puissants gaz à effet de serre. Les gaz fluorés font également l'objet de plusieurs réglementations visant à en limiter fortement l'utilisation.

Certes, le document US 716 086 daté de 1951 propose de mettre en oeuvre un diester dans des compositions lubrifiantes. Toutefois, cette utilisation est considérée dans un contexte très différent de celui de l'invention. Tout d'abord, les compositions lubrifiantes considérées dans le brevet US 716 086 sont non conformes à celles considérées selon l'invention et notamment destinées à être utilisées dans des moteurs d'avions qui sont exposés à de très grandes variations de température. Les esters synthétiques y sont décrits comme étant plus intéressants que les huiles minérales dans la mesure où ils possèdent des indices de viscosité et des points éclairs élevés, et des points d'écoulement plus faibles que les huiles minérales de viscosité comparable.

Le document WO2018/078290 divulgue l'utilisation d'une composition lubrifiante pour refroidir et/ou lubrifier un moteur de véhicule électrique comprenant au moins un polyalkylène glycol. Notamment, une telle composition comprend au moins un polyalkylene glycol (PAG) obtenu par polymérisation ou copolymérisation d'oxydes d'alkylène comprenant de 2 à 8 atomes de carbone, de préférence de 2 à 4 atomes de carbone.

Par ailleurs, le document US2012/283162 divulgue l'utilisation d'une huile de base pour refroidir un dispositif, et comprenant 30% en masse d'au moins un composé choisi parmi un ester oléique et un éther oléique. Notamment, dans une telle huile de base, l'ester d'oléyle et l'éther d'oléyle ont chacun 23 ou plus du nombre total d'un groupe méthyle terminal, d'un groupe méthylène et d'un groupe éther dans une chaîne principale ; l'ester d'oléyle et l'éther d'oléyle ont chacun 1 ou moins du nombre total d'une branche méthyle et d'une branche éthyle ; et l'huile de base a une viscosité cinématique comprise entre 4 mm² /s et 30 mm² /s.

Pour des raisons évidentes d'économie et de facilité de mise en oeuvre, il serait avantageux de disposer d'une composition permettant de répondre simultanément aux besoins de lubrification et de refroidissement d'un système de propulsion d'un véhicule électrique ou hybride.

Malheureusement, ces deux propriétés, lubrification et refroidissement, imposent à première vue des contraintes opposées. De fait, pour refroidir au mieux un moteur électrique, il est connu de mettre en oeuvre des produits, comme l'eau, les plus fluides possibles. Or de tels fluides ne permettent pas d'assurer un bon niveau de lubrification. A l'inverse, les compositions de viscosité élevée, aptes à assurer un bon niveau de lubrification et de protection des organes en contact contre l'usure, présentent un potentiel refroidissant non satisfaisant.La présente invention vise précisément à proposer une nouvelle composition permettant de satisfaire simultanément la lubrification et le refroidissement des éléments du système de propulsion susmentionnés.

Plus précisément, les inventeurs ont découvert qu'il est possible d'assurer la fonction multiple de lubrification et de refroidissement d'un système de propulsion d'un véhicule électrique ou hybride, en mettant en oeuvre au moins diester de formule (I) telle que définie ci-après, dans une composition lubrifiante.

La composition ainsi formée peut ainsi être mise en contact direct avec le système de propulsion et refroidir le moteur, l'électronique de puissance et la batterie par le biais de ce contact direct de ladite composition sur ces organes, tout en assurant également leur lubrification.

La composition ainsi en contact direct avec ces organes apporte un meilleur refroidissement que les refroidissements conventionnels par air et en contact indirect par eau. Cette mise en contact direct permet une meilleure dissipation de la chaleur.

En effet, le refroidissement par air permet un refroidissement direct mais l'air est un très mauvais fluide de dissipation de la chaleur. A l'inverse, l'eau est un fluide performant pour le refroidissement mais n'est pas compatible avec un contact direct avec le moteur, l'électronique de puissance et la batterie.

Ainsi, la présente invention concerne, selon un premier de ses aspects, l'utilisation d'une composition, pour refroidir et lubrifier un système de propulsion d'un véhicule électrique ou hybride, selon la revendication 1.

Plus particulièrement, la composition lubrifiante, ainsi additivée, est destinée à être mise en contact direct avec les batteries des véhicules électriques, notamment les batteries Li-ion ou Ni-Cd, qui sont notamment en immersion ou semi-immersion, statique ou en circulation, dans ladite composition lubrifiante additivée, ou composition mise en oeuvre selon l'invention, ou encore directement pulvérisée sous forme de spray, jet, brouillard d'huile.

Une composition telle que définie selon l'invention permet de refroidir efficacement la batterie présente dans un véhicule électrique ou hybride.

Les propriétés refroidissantes d'un ester requis selon l'invention peuvent être déterminées par mesure de la conductivité thermique, notée λ, et de la capacité thermique, notée Cp, dudit ester.

La conductivité thermique caractérise le comportement d'un matériau lors du transfert thermique par conduction. Elle représente l'énergie (quantité de chaleur) transférée par unité de surface et de temps sous un gradient de température de 1 kelvin par mètre. Plus la conductivité thermique est élevée, plus le matériau est conducteur d'énergie et aura la capacité de dissiper la chaleur.

La conductivité thermique peut être mesurée selon la norme ASTM D7896.

La capacité thermique (ou capacité calorifique) permet de quantifier la capacité d'un corps à absorber ou restituer de l'énergie par échange thermique au cours d'une variation de température. Plus la capacité thermique est élevée, plus le corps est conducteur d'énergie et aura la capacité de dissiper la chaleur.

La capacité thermique peut être mesurée par calorimétrie différentielle à balayage (ou DSC pour « Differential Scanning Calorimetry » en langue anglaise) selon la norme ASTM E1269.

Les inventeurs ont constaté, de manière surprenante, que les diesters de formule (I) requis selon l'invention présentent des valeurs de conductivité et de capacité thermique élevées, comme démontré en exemple 1 ci-après.

En effet, les valeurs obtenues démontrent qu'un diester de formule (I) telle que définie ci-dessus a la capacité de dissiper efficacement la chaleur. Sa mise en oeuvre dans une composition comprenant au moins une huile de base, permet ainsi de conférer à ladite composition des propriétés de refroidissement des pièces à son contact, en particulier d'une batterie d'un véhicule électrique ou hybride.

Une composition mise en oeuvre selon l'invention permet en outre d'assurer la lubrification du système de propulsion d'un véhicule électrique ou hybride, et plus particulièrement le moteur électrique lui-même et la transmission.

Avantageusement, une composition telle que définie selon l'invention permet d'assurer la lubrification de la transmission, en particulier du réducteur, d'un véhicule électrique ou hydride.

Ainsi, cette composition unique mise en oeuvre selon l'invention permet d'assurer à la fois le refroidissement du moteur, de l'électronique de puissance et de la batterie, notamment une batterie Li-ion ou Ni-Cd, ainsi que la lubrification du moteur électrique, de la transmission, en particulier le réducteur, dans un véhicule électrique ou hybride.

En outre, la mise en oeuvre d'au moins un diester de formule (I) telle que définie ci-dessus dans au moins une huile de base, permet avantageusement d'augmenter la température d'inflammabilité de l'huile de base.

Ainsi, une composition mise en oeuvre selon l'invention présente une inflammabilité à haute température tout particulièrement intéressante.

Avantageusement encore, la mise en oeuvre d'au moins un diester de formule (I) telle que définie ci-dessus, dans au moins une huile de base, permet d'augmenter la durée de vie de ladite composition.

En effet, il est connu que l'utilisation prolongée d'une composition de lubrification et/ou de refroidissement induit une réduction du volume de composition due à son évaporation, et donc une dégradation des propriétés de ladite composition au cours du temps.

Or, les inventeurs ont constaté, de manière surprenante que, comme démontré dans l'exemple 2 ci-après, un diester de formule (I) requis selon l'invention présente des temps d'évaporation supérieurs, et donc une volatilité moins importante, comparativement à ceux observés pour des diesters non conformes à l'invention, en particulier correspondant à la formule (I) définie ci-dessus pour laquelle s vaudrait 3.

La volatilité peut être mesurée par analyse thermogravimétrique, ou ATG, selon la norme ASTM D6375.

Ainsi, un diester de formule (I) conforme à l'invention confère à une composition dans laquelle il est mis en oeuvre, des propriétés avantageuses, en particulier de lubrification et de refroidissement, sur une durée d'utilisation plus importante, augmentant de ce fait l'intervalle de vidange. Ce critère est particulièrement important pour les organes du système de propulsion difficilement accessibles et dont les vidanges peuvent s'avérer complexes, telles que les batteries.

La présente invention concerne donc, selon un autre de ses aspects, l'utilisation d'un diester de formule (I) telle que définie ci-dessus, dans une composition de refroidissement et de lubrification d'un système de propulsion d'un véhicule électrique ou hybride, comprenant au moins une huile de base, pour augmenter l'intervalle de vidange du système de propulsion, en particulier de sa batterie.

La présente invention concerne encore un procédé de refroidissement et de lubrification d'un système de propulsion d'un véhicule électrique ou hybride, comprenant au moins une étape de mise en contact d'au moins une pièce mécanique dudit système avec une composition telle que décrite selon l'invention.

Selon un autre aspect, la présente invention concerne également l'utilisation d'une composition, pour refroidir et lubrifier un système de propulsion d'un véhicule électrique ou hybride, selon la revendication 11.

Selon un autre aspect, la présente invention concerne en outre l'utilisation d'une composition, pour refroidir et lubrifier un système de propulsion d'un véhicule électrique ou hybride, selon la revendication 12.

D'autres caractéristiques, variantes et avantages de la mise en oeuvre d'une composition définie selon l'invention ressortiront mieux à la lecture de la description et de la figure qui suivent.

Dans la suite du texte, les expressions « compris entre ... et ... », « allant de ... à ... » et « variant de ... à ... » sont équivalentes et entendent signifier que les bornes sont incluses, sauf mention contraire.

Sauf indication contraire, l'expression « comportant un(e) » doit être comprise comme « comprenant au moins un(e) ».

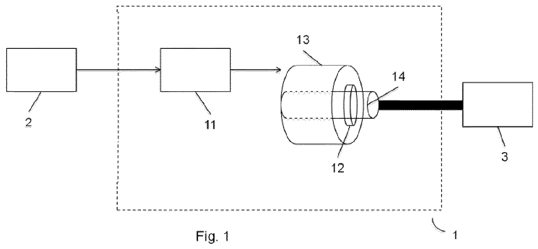

La figure 1 est une représentation schématique d'un système de propulsion électrique ou hybride.

### COMPOSITION

Comme indiqué précédemment, une composition mise en oeuvre selon l'invention comprend au moins (i) une huile de base ou base fluide comme explicité ci-après, et (ii) au moins un diester de formule (I) définie en détail ci-après.

Plus particulièrement, une composition mise en oeuvre selon l'invention peut présenter une viscosité cinématique, mesurée à 100°C selon la norme ASTM D445, comprise entre 2 et 8 mm²/s, de préférence entre 3 et 7 mm²/s.

Avantageusement, une composition lubrifiante mise en oeuvre selon l'invention peut être de grade selon la classification SAEJ300 défini par la formule (X)W(Y), dans laquelle X représente 0 ou 5 ; et Y représente un nombre entier allant de 4 à 20, en particulier allant de 4 à 16 ou de 4 à 12.

### Huile de base

Une composition mise en oeuvre selon l'invention comprend au moins une huile de base, en particulier une base fluide formée d'une ou plusieurs huiles de base, présentant une viscosité cinématique, mesurée à 100 °C selon la norme ASTM D445 allant de 1,5 à 8 mm²/s, en particulier de 1,5 à 6,1 mm²/s, plus particulièrement de 1,5 à 4,1 mm²/s, encore plus particulièrement de 1,5 à 2,1 mm²/s.

Cette huile de base peut être un mélange de plusieurs huiles de base, à savoir un mélange de 2, 3 ou 4 huiles de base.

Dans la suite du texte, on désignera sous l'appellation « base fluide », l'huile ou le mélange d'huiles de base, présentant une viscosité cinématique mesurée à 100°C selon la norme ASTM D445 allant de 1,5 à 8 mm²/s.

L'huile de base présente dans une composition lubrifiante mise en oeuvre selon l'invention peut être choisie parmi les huiles d'origines minérales ou synthétiques appartenant aux groupes I à V selon les classes définies dans la classification API (ou leurs équivalents selon la classification ATIEL) et présentées dans le tableau A ci-dessous ou leurs mélanges, pour autant que l'huile ou mélange d'huiles présente la viscosité souhaitée précitée.

**Tableau A**

| | Teneur en saturés | Teneur en soufre | Indice de viscosité (VI) |
|---|---|---|---|
| Groupement I Huiles minérales | < 90 % | > 0,03 % | 80 ≤VI < 120 |
| Groupement II Huiles hydrocraquées | ≥90 % | ≤0,03 % | 80 ≤VI < 120 |
| Groupement III Huiles hydrocraquées ou hydro-isomérisées | ≥90 % | ≤0,03 % | ≥120 |
| Groupement IV | Polyalphaoléfines (PAO) | | |
| Groupement V | Esters et autres bases non incluses dans les groupes I à IV | | |

Les huiles de base minérales incluent tous types d'huiles de base obtenues par distillation atmosphérique et sous vide du pétrole brut, suivies d'opérations de raffinage telles qu'extraction au solvant, désalphatage, déparaffinage au solvant, hydrotraitement, hydrocraquage, hydroisomérisation et hydrofinition.

Des mélanges d'huiles synthétiques et minérales, pouvant être biosourcées, peuvent également être employés.

Il n'existe généralement aucune limitation quant à l'emploi d'huiles de base différentes pour réaliser les compositions mises en oeuvre selon l'invention, si ce n'est qu'elles doivent, outre répondre au critère de viscosité précité, avoir des propriétés, notamment d'indice de viscosité, de teneur en soufre ou de résistance à l'oxydation, adaptées à une utilisation pour des systèmes de propulsion d'un véhicule électrique ou hybride.

Les huiles de bases des compositions mises en oeuvre selon l'invention peuvent également être choisies parmi les huiles synthétiques, telles certains esters d'acides carboxyliques et d'alcools, les polyalphaoléfines (PAO), et les polyalkylène glycol (PAG) obtenus par polymérisation ou copolymérisation d'oxydes d'alkylène comprenant de 2 à 8 atomes de carbone, en particulier de 2 à 4 atomes de carbone.

Les PAO utilisées comme huiles de base sont par exemple obtenues à partir de monomères comprenant de 4 à 32 atomes de carbone, par exemple à partir d'octène ou de décène.

La masse moléculaire moyenne en poids de la PAO peut varier assez largement. De manière préférée, la masse moléculaire moyenne en poids de la PAO est inférieure à 600 Da. La masse moléculaire moyenne en poids de la PAO peut également aller de 100 à 600 Da, de 150 à 600 Da, ou encore de 200 à 600 Da.

Par exemple, les PAO mises en oeuvre dans le cadre de l'invention, présentant une viscosité cinématique, mesurée à 100 °C selon la norme ASTM D445, allant de 1,5 à 8 mm²/s sont vendues commercialement par Ineos sous les marques Durasyn^{®} 162, Durasyn^{®} 164, Durasyn^{®} 166 et Durasyn^{®} 168.

Avantageusement, l'huile ou les huiles de base de la composition mise en oeuvre selon l'invention sont choisies parmi les polyalphaoléfines (PAO).

De préférence, une composition mise en oeuvre selon l'invention comprend une base fluide formée d'une ou plusieurs huiles de base présentant une viscosité cinématique mesurée à 100 °C selon la norme ASTM D445 comprise entre 1,5 et 8 mm²/s.

Autrement dit, une composition mise en oeuvre selon l'invention peut être exempte d'huile de base ou mélange d'huiles de base ne répondant pas au critère de viscosité cinématique mesurée à 100 °C selon la norme ASTM D445, en particulier exempte d'huile ou de mélange d'huiles de base présentant une viscosité supérieure à 9 mm²/s.

Il appartient à l'homme du métier d'ajuster la teneur en base fluide à mettre en oeuvre dans une composition mise en oeuvre selon l'invention pour atteindre la viscosité souhaitée pour la composition.

Comme indiqué précédemment, la base fluide procure notamment le potentiel refroidissant de la composition mise en oeuvre selon l'invention. En particulier, la fluidité de la base assure notamment de bonnes propriétés de refroidissement lors de la mise en oeuvre de la composition au contact des batteries d'un système de propulsion d'un véhicule électrique ou hydride.

Les propriétés de refroidissement de la composition mise en oeuvre sont encore avantageusement accrues par le cisaillement appliqué à la composition au niveau de l'injection qui amène le fluide à un niveau de viscosité plus faible qu'au repos.

En particulier, une composition mise en oeuvre selon l'invention comprend de 60 % à 99,5 % en poids, de préférence de 70 % à 98 %, encore plus préférentiellement de 80 % à 98 %, avantageusement de 90 % à 97 % en poids d'huile de base, ou mélange d'huiles de base, notamment présentant une viscosité cinématique mesurée à 100 °C selon la norme ASTM D445 allant de 1,5 à 8 mm²/s, par rapport au poids total de la composition.

### Diester de formule (I)

Comme précisé précédemment, une composition lubrifiante mise en oeuvre selon l'invention a pour spécificité de contenir au moins un diester de formule générale (I), distinct de l'huile de base définie précédemment,

R^{a}-C(O)-O-([C(R)₂]ₙ-O)ₛ-C(O)-R^{b} (I)

dans laquelle :
- R représentent, indépendamment les uns des autres, un atome d'hydrogène ou un groupe (C₁-C₅)alkyle, linéaire ou ramifié, en particulier un groupe méthyle, éthyle ou propyle, notamment méthyle ;
- s vaut 1 ou 2 ;
- n vaut 1, 2 ou 3 ; en particulier n vaut 2 ou 3 et plus particulièrement n vaut 2, étant entendu que, lorsque s est différent de 1, n peuvent être identiques ou différents ; et
- R^{a} et R^{b}, identiques ou différents, représentent indépendamment les uns des autres, des groupements hydrocarbonés, saturés ou insaturés, linéaires ou ramifiés, présentant un enchaînement linéaire de 2 à 11 atomes de carbone, de préférence de 3 à 8 atomes de carbone ;

sous réserve que, lorsque s vaut 2 et n, identiques, valent 2, au moins l'un des groupe R représente un groupe (C₁-C₅)alkyle, linéaire ou ramifié ; et
sous réserve que, lorsque s vaut 1 et n vaut 3, au moins l'un des groupes R lié au carbone en position bêta des atomes d'oxygène des fonctions esters représente un atome d'hydrogène.

Selon un mode de réalisation, R^{a} et R^{b}, identiques ou différents, représentent indépendamment les uns des autres, des groupements hydrocarbonés, saturés ou insaturés, linéaires ou ramifiés, comprenant de 2 à 11 atomes de carbone, de préférence de 3 à 8 atomes de carbone.

On désignera plus simplement dans la suite du texte, un diester de formule (I) requis selon l'invention, par diester de l'invention.

De préférence, dans le cadre de l'invention, on entend par :
- « C_{t-z} » où t et z sont des entiers, une chaîne carbonée pouvant avoir de t à z atomes de carbone ; par exemple C₁₋₄ une chaîne carbonée qui peut avoir de 1 à 4 atomes de carbone ;
- « alkyle », un groupe aliphatique saturé, linéaire ou ramifié ; par exemple un groupe C ₁₋₄-alkyle représente une chaîne carbonée de 1 à 4 atomes de carbone, linéaire ou ramifiée, plus particulièrement un méthyle, éthyle, propyle, isopropyle, butyle, isobutyle, tert-butyle.

De préférence, dans la formule (I) précitée, lorsque s est différent de 1, tous les n sont identiques.

En particulier, n dans la formule (I) précitée vaut 2 ou 3, et plus particulièrement n vaut 2.

De préférence, au moins l'un des groupes R représente un groupe (C₁-C₅)alkyle, en particulier (C₁-C₄)alkyle, linéaire ou ramifié, plus préférentiellement méthyle, éthyle ou propyle ; avantageusement méthyle.

Selon un mode de réalisation particulièrement préféré, le diester de formule (I) requis selon l'invention peut être plus particulièrement un diester de formule (I') suivante :

R^{a}-C(O)-O-([C(R)₂]ₙ-O)-([C(R')₂]ₘ-O)ₛ₋₁-C(O)-R^{b} (I')

dans laquelle :
- R et R' représentent, indépendamment les uns des autres, un atome d'hydrogène ou un groupe (C₁-C₅)alkyle, linéaire ou ramifié, en particulier un groupe méthyle, éthyle ou propyle, notamment un groupe méthyle ;
- s vaut 1 ou 2 ;
- n vaut 2 ;
- m vaut 2 ;
- R^{a} et R^{b}, identiques ou différents, représentent indépendamment les uns des autres, des groupements hydrocarbonés, saturés ou insaturés, linéaires ou ramifiés, présentant un enchaînement linéaire de 2 à 11 atomes de carbone, de préférence de 3 à 8 atomes de carbone ;
sous réserve que, lorsque s vaut 2, au moins l'un des groupes R ou R' représente un groupe (C₁-C₅)alkyle, linéaire ou ramifié.

De préférence, un diester requis selon l'invention est de formule (I') dans laquelle au moins l'un des R ou R' représente un groupe (C₁-C₅)alkyle, en particulier (C₁-C₄)alkyle, linéaire ou ramifié, plus préférentiellement méthyle, éthyle ou propyle ; avantageusement méthyle.

Selon une variante de réalisation, s dans la formule (I) ou (I') précitée vaut 2.

En particulier, le diester requis selon l'invention peut être de formule (I'a) suivante :

R^{a}-C(O)-O-([C(R)₂]ₙ-O)-([C(R')₂]ₘ-O)-C(O)-R^{b} (l'a)

dans laquelle :
- R et R' représentent, indépendamment les uns des autres, un atome d'hydrogène ou un groupe (C₁-C₅)alkyle, linéaire ou ramifié, en particulier un groupe méthyle, éthyle ou propyle, avantageusement méthyle ;
- n vaut 2 ;
- m vaut 2 ;
- R^{a} et R^{b}, identiques ou différents, représentent indépendamment les uns des autres, des groupements hydrocarbonés, saturés ou insaturés, linéaires ou ramifiés, présentant un enchaînement linéaire de 2 à 11 atomes de carbone, de préférence de 3 à 8 atomes de carbone ;
sous réserve qu'au moins l'un des groupes R ou R' représente un groupe (C₁-C₅)alkyle, linéaire ou ramifié, en particulier méthyle, éthyle ou propyle, avantageusement méthyle.

De préférence, au moins l'un des groupes R représente un groupe (C₁-C₅)alkyle, linéaire ou ramifié, en particulier un groupe méthyle, éthyle ou propyle, avantageusement méthyle ; et au moins l'un des R' représente un groupe (C₁-C₅)alkyle, linéaire ou ramifié, en particulier un groupe méthyle, éthyle ou propyle, avantageusement méthyle.

Encore plus préférentiellement, le diester de l'invention peut être de formule (I'a) dans laquelle l'un des groupes R représente un groupe (C₁-C₅)alkyle, linéaire ou ramifié, en particulier un groupe méthyle, éthyle ou propyle, avantageusement méthyle ; et l'un des groupes R' représente un groupe (C₁-C₅)alkyle, linéaire ou ramifié, en particulier un groupe méthyle, éthyle ou propyle, avantageusement méthyle ; les autres groupes R et R' représentant des atomes d'hydrogène.

Autrement dit, selon un mode de réalisation particulier, le diester de l'invention peut être de formule (I"a) suivante :

R^{a}-C(O)-O-CHR¹-CHR²-O-CHR³-CHR⁴-O-C(O)-R^{b} (I"a)

dans laquelle :
- l'un des groupes R¹ et R² représente un groupe (C₁-C₅)alkyle, linéaire ou ramifié, l'autre représentant un atome d'hydrogène ;
- l'un des groupes R³ et R⁴ représente un groupe (C₁-C₅)alkyle, linéaire ou ramifié, l'autre représentant un atome d'hydrogène ; et
- R^{a} et R^{b}, identiques ou différents, sont tels que définis précédemment.

En particulier, le diester de l'invention peut être de formule (I"a) dans laquelle :
- l'un des groupes R¹ et R² représente un groupe méthyle, éthyle ou propyle, avantageusement méthyle, l'autre représentant un atome d'hydrogène ; et
- l'un des groupes R³ et R⁴ représente un groupe méthyle, éthyle ou propyle, avantageusement méthyle, l'autre représentant un atome d'hydrogène.

Selon une autre variante de réalisation, s dans la formule (I) ou (I') précitée vaut 1.

Autrement dit, le diester requis selon l'invention peut être de formule (I'b) suivante :

R^{a}-C(O)-O-([C(R)₂]ₙ-O)-C(O)-R^{b} (I'b)

dans laquelle :
- R représentent, indépendamment les uns des autres, un atome d'hydrogène ou un groupe (C₁-C₅)alkyle, linéaire ou ramifié, en particulier un groupe méthyle, éthyle ou propyle, avantageusement méthyle ;
- n vaut 2 ;
- R^{a} et R^{b}, identiques ou différents, représentent indépendamment les uns des autres, des groupements hydrocarbonés, saturés ou insaturés, linéaires ou ramifiés, présentant un enchaînement linéaire de 2 à 11 atomes de carbone, de préférence de 3 à 8 atomes de carbone.

De préférence, dans la formule (I'b) précitée, au moins l'un des R représente un groupe (C₁-C₅)alkyle, linéaire ou ramifié, en particulier un groupe méthyle, éthyle ou propyle, avantageusement méthyle.

En particulier, le diester de l'invention peut être de formule (I'b) dans laquelle un des groupes R représente un groupe (C₁-C₅)alkyle, linéaire ou ramifié, en particulier un groupe méthyle, éthyle ou propyle, avantageusement méthyle, les autres représentant des atomes d'hydrogène.

Comme indiqué précédemment, R^{a} et R^{b} dans la formule (I), (I'), (l'a), (I"a) ou (I'b) précitée, identiques ou différents, représentent des groupements hydrocarbonés, saturés ou insaturés, linéaires ou ramifiés, présentant un enchaînement linéaire de 2 à 11 atomes de carbone, de préférence de 3 à 8 atomes de carbone.

On entend par groupement "hydrocarboné", tout groupement ayant un atome de carbone directement fixé au reste de la molécule et ayant principalement un caractère hydrocarboné aliphatique.

De préférence, R^{a} et R^{b} dans la formule (I), (I'), (l'a), (I"a) ou (I'b) précitée, présentent un enchaînement linéaire de 3 à 6 atomes de carbone.

Selon une variante de réalisation, R^{a} et R^{b} dans la formule (I), (I'), (l'a), (I"a) ou (I'b) précitée, présentent un enchaînement linéaire de 8 à 11 atomes de carbone.

Par « enchaînement linéaire de t à z atomes de carbone », on entend une chaîne carbonée saturée ou insaturée, de préférence saturée, comprenant de t à z atomes de carbone les uns à la suite des autres, les atomes de carbone présents éventuellement au niveau des ramifications de la chaîne carbonée n'étant pas pris en compte dans le nombre d'atomes de carbone (t-z) constituant l'enchaînement linéaire.

Selon un mode de réalisation particulier, dans la formule (I), (I'), (l'a), (I"a) ou (I'b) précitée, R^{a} et R^{b}, identiques ou différents, sont issus d'origine végétale, animale ou pétrolière.

Selon un mode de réalisation particulier, dans la formule (I), (I'), (l'a), (I"a) ou (I'b) précitée, R^{a} et R^{b}, identiques ou différents, représentent des groupements saturés.

Selon un autre mode de réalisation particulièrement préféré, dans la formule (I), (I'), (I'a), (I"a) ou (I'b) précitée, R^{a} et R^{b}, identiques ou différents, représentent des groupements linéaires.

Selon un autre mode de réalisation particulier, dans la formule (I), (I'), (I'a), (I"a) ou (I'b) précitée, R^{a} et R^{b} représentent des groupements hydrocarbonés linéaires saturés en C₈ à C₁₁, en particulier en C₈ à C₁₀.

En particulier, R^{a} et R^{b} sont identiques.

De préférence, R^{a} et R^{b} représentent tous les deux des groupements n-octyle ou n-undécyle, de préférence n-octyle.

Selon un autre mode de réalisation particulier, dans la formule (I), (I'), (I'a), (I"a) ou (I'b) précitée, R^{a} et R^{b} représentent des groupements hydrocarbonés ramifiés comprenant de 2 à 11 atomes de carbone, de préférence de 3 à 8 atomes de carbone.

Selon cette variante, R^{a} et R^{b} dans la formule (I), (I'), (I'a), (I"a) ou (I'b) précitée, présentent de préférence un enchaînement linéaire de 3 à 7 atomes de carbone ramifié par au moins un, de préférence un, groupement hydrocarboné en C₁ à C₆, de préférence un méthyle ou un éthyle.

En particulier, R^{a} et R^{b} sont identiques.

De préférence, R^{a} et R^{b} représentent tous les deux des groupements 2-méthylheptyle ou 2-éthylhexyle.

Les diesters de formule (I) requis selon l'invention peuvent être disponibles dans le commerce ou préparés selon des méthodes de synthèse décrites dans la littérature et connues de l'homme du métier. Ces méthodes de synthèse mettent plus particulièrement en oeuvre une réaction d'estérification entre un composé diol de formule HO-([C(R)₂]ₙ-O)ₛ-OH et des composés de formule R^{a}-COOH et R^{b}-COOH, avec R^{a} et R^{b}, identiques ou différents, étant tels que définis précédemment.

Bien entendu, il appartient à l'homme du métier d'ajuster les conditions de synthèse pour obtenir les diesters requis selon l'invention.

A titre d'exemples, des diesters de formule (I) précitée, en particulier de formule (I') précitée, peuvent être obtenus par réaction d'estérification entre un mono- ou polypropylène glycol, en particulier le monopropylène glycol (MPG) ou le dipropylène glycol (DPG), le diéthylène glycol (DEG), le néopentyle glycol (NPG), de préférence entre le dipropylène glycol ou le diéthylène glycol, et un ou plusieurs acides carboxyliques R^{a}-COOH et R^{b}-COOH adéquats, en particulier choisi(s) parmi l'acide nonanoïque, l'acide dodécanoïque, l'acide isononanoïque, l'acide 2-éthylhexanoïque, et leurs mélanges.

A titre d'exemple, un diester ou mélange de diesters de formule (I') telle que définie précédemment, où :
- s vaut 2,
- l'un des groupes R représentant un groupe (C₁-C₅)alkyle, linéaire ou ramifié, en particulier un groupe méthyle, éthyle ou propyle, avantageusement méthyle, les autres représentant des atomes d'hydrogène ; et
- l'un des groupes R' représentant un groupe (C₁-C₅)alkyle, linéaire ou ramifié, en particulier un groupe méthyle, éthyle ou propyle, avantageusement méthyle, les autres représentant des atomes d'hydrogène,
peut être obtenu *via* une réaction d'estérification entre le dipropylène glycol (DPG) et un ou plusieurs acides carboxyliques R^{a}-COOH et R^{b}-COOH adéquats.

Un diester de formule (I') telle que définie précédemment, où
- s vaut 1,
- l'un des groupes R représentant un groupe (C₁-C₅)alkyle, linéaire ou ramifié, en particulier un groupe méthyle, éthyle ou propyle, avantageusement méthyle, les autres représentant des atomes d'hydrogène,
peut être obtenu *via* une réaction d'estérification entre le monopropylène glycol (MPG) et un ou plusieurs acides carboxyliques R^{a}-COOH et R^{b}-COOH adéquats.

En particulier, dans le cas où R^{a} et R^{b} représentent tous les deux des groupements n-octyle ou n-undécyle, un tel diester ou mélange de diesters peut être ainsi obtenu par réaction d'estérification entre le monopropylène glycol ou dipropylène glycol et l'acide nonanoïque ou l'acide dodécanoïque.

Selon un mode de réalisation, un diester ou mélange de diester requis selon l'invention peut être obtenu par réaction d'estérification entre le dipropylène glycol et l'acide nonanoïque, l'acide dodécanoïque et leurs mélanges.

Selon un autre mode de réalisation, un diester ou mélange de diester requis selon l'invention peut être obtenu par réaction d'estérification entre le diéthylène glycol et l'acide nonanoïque.

Selon un autre mode de réalisation, un diester ou mélange de diester requis selon l'invention peut être obtenu par réaction d'estérification entre le néopentyle glycol et l'acide nonanoïque, l'acide isononanoïque, l'acide 2-éthylhexanoïque et leurs mélanges.

Le diester de formule (I) requis selon l'invention présente avantageusement une viscosité cinématique mesurée à 40°C selon la norme ASTM D445 comprise entre 5 et 18 mm²/s, de préférence entre 8 et 15 mm²/s, et/ou une viscosité cinématique mesurée à 100°C selon la norme ASTM D445 comprise entre 1,5 et 9,3 mm²/s, de préférence entre 2 et 4 mm²/s.

Le diester de formule (I) requis selon l'invention présente avantageusement une conductivité thermique mesurée à 30°C selon la norme ASTM D7896, supérieure ou égale à 100 mW/Km, de préférence comprise entre 110 et 180 mW/Km et/ou une conductivité thermique mesurée à 130°C selon la norme ASTM D7896, supérieure ou égale à 90 mW/Km, de préférence comprise entre 95 et 160 mW/Km.

Le diester de formule (I) requis selon l'invention présente avantageusement une capacité thermique mesurée à 20°C selon la norme ASTM E1269, supérieure ou égale à 1,5 J/K, de préférence comprise entre 1,8 et 2,1 J/K et/ou une capacité thermique mesurée à 80°C selon la norme ASTM E1269, supérieure ou égale à 2 J/K, de préférence comprise entre 2,0 et 2,8 J/K.

Le diester de formule (I) requis selon l'invention présente avantageusement une durée d'évaporation de 20% en poids dudit ester, mesurée selon la norme ASTM D6375 supérieure ou égale à 400 secondes, de préférence comprise entre 410 et 600 secondes.

Il est entendu dans le cadre de la présente invention que le diester de formule (I) telle que définie précédemment peut être sous forme d'un mélange de diesters de formule (I) telle que définie précédemment.
Comme précisé précédemment, une composition lubrifiante mise en oeuvre selon l'invention a pour spécificité de contenir au moins un diester de formule générale (I),le ou les diester(s) de formule (I) étant présent(s) dans une teneur comprise entre 1 et 25 % en poids, par rapport au poids total de la composition mise en oeuvre selon l'invention, en particulier entre 5 et 25 % en poids, et plus particulièrement entre 10 et 25 % en poids.

En termes de formulation d'une composition mise en oeuvre selon la présente invention, toutes les méthodes connues de l'homme de l'art peuvent être utilisées pour cette additivation de l'huile par au moins un ester de dipropylène glycol.

Le ou les diester(s) de formule (I) telle que définie ci-dessus peu(ven)t être incorporé(s) directement dans l'huile lubrifiante de base.

Selon une variante de réalisation, une composition mise en oeuvre selon l'invention est formée, autrement dit consiste en un mélange :
- d'une huile de base, ou mélange d'huiles de base, présentant une viscosité cinématique mesurée à 100 °C selon la norme ASTM D445 allant de 1,5 à 8 mm²/s ; et
- d'un diester de formule (I) telle que définie précédemment.

Alternativement, une composition mise en oeuvre selon l'invention peut comprendre en outre un ou plusieurs additifs additionnels tels que définis plus précisément dans la suite du texte.

### Additifs additionnels

Selon une variante de l'invention, une composition lubrifiante mise en oeuvre selon la présente invention peut comprendre en outre au moins un additif modulant les propriétés de l'huile de base.

Il est entendu que la nature et la quantité d'additifs mis en oeuvre sont choisies de manière à ne pas affecter les propriétés combinées de pouvoir refroidissant et lubrifiant de la composition mise en oeuvre selon l'invention.

### Fluide hydrocarboné

Une composition mise en oeuvre selon l'invention peut en outre mettre en oeuvre au moins un fluide hydrocarboné ayant un point d'ébullition supérieur ou égal à 50°C.

Un tel fluide hydrocarboné présente de préférence un point d'ébullition compris entre 50 et 350°C, en particulier entre 60 et 250°C, et encore plus particulièrement entre 80 et 200°C.

De préférence, le fluide hydrocarboné présente une teneur en carbone d'origine biologique supérieure ou égale à 90 % en poids, par rapport au poids total du fluide hydrocarboné.

Au sens de la présente invention, on entend par « fluide hydrocarboné », tout fluide comprenant des molécules d'hydrocarbures linéaires, saturés ou insaturés, pouvant également comprendre des groupes aromatiques ou cycliques, ou encore des hétéroatomes.

Avantageusement, le fluide hydrocarboné est totalement saturé. De préférence, les composants du fluide hydrocarboné sont choisis parmi les isoparaffines comprenant 12 à 30 atomes de carbone, préférentiellement 13 à 19 atomes de carbone et plus préférentiellement 14 à 18 atomes de carbones.

Selon un mode de réalisation, le fluide hydrocarboné comprend des alcanes, ou molécules linéaires d'hydrocarbures saturés à chaîne non cyclique, en particulier comprenant entre 12 et 30 atomes de carbone, dans une teneur comprise entre 80 et 100 % en poids, par rapport au poids total du fluide hydrocarboné, voire entre 90 et 100 % en poids, et par exemple entre 95 et 100 % en poids.

Dans le cadre de la présente invention, les « paraffines » désignent les hydrocarbures à chaînes droites (encore appelées « paraffines normales ») ou et à chaînes ramifiées (encore appelées « isoparaffines »).

A titre d'hétéroatomes, dans le cadre de la présente invention, on peut notamment citer l'azote et l'oxygène.

Selon un mode de réalisation particulier de l'invention, le fluide hydrocarboné comprend de 90 à 100 % en poids d'isoparaffines, une teneur de paraffines normales allant de 0 à 10 % en poids et une teneur en carbones d'origine biologique supérieure ou égale à 90 % en poids par rapport au poids total du fluide hydrocarboné.

Le fluide hydrocarboné comprend avantageusement une teneur supérieure ou égale à 90 % en poids, en particulier supérieure ou égale à 95 % en poids, et encore plus avantageusement supérieure ou égale à 98 % en poids d'isoparaffines, par rapport au poids total en fluide hydrocarboné.

Selon un mode réalisation, les isoparaffines présentes dans le fluide hydrocarboné comportent de 12 à 30 atomes de carbone, de préférence de 13 à 19 atomes de carbone et de façon encore plus préférée de 14 à 18 atomes de carbone.

Le fluide hydrocarboné comprend avantageusement une teneur en paraffines normales inférieure ou égale à 10 % en poids, préférentiellement inférieure ou égale à 5 % et encore plus préférentiellement inférieure ou égale à 2 % en poids, par rapport au poids total du fluide hydrocarboné.

Les isoparaffines sont avantageusement des isoparaffines non cycliques. De préférence, le fluide hydrocarboné présente un ratio massique isoparaffines sur paraffines normales d'au moins 12 :1, préférentiellement d'au moins 15 :1 et plus préférentiellement d'au moins 20 :1. Selon un mode de réalisation encore plus particulier, le fluide hydrocarboné ne comprend pas de paraffines normales.

Le fluide hydrocarboné comprend de préférence une teneur en poids d'isoparaffines allant de 90 à 100 % et une teneur en paraffines normales allant de 0 à 10 %, préférentiellement de 95 à 100 % d'isoparaffines choisies parmi les alcanes comportant de 12 à 30 atomes de carbone, de préférence de 12 à 24 atomes de carbone, de préférence encore de 12 à 22 atomes de carbone.

Selon un mode de réalisation particulier, le fluide hydrocarboné comprend une majorité, c'est-à-dire plus de 90 % en poids, de molécules ayant de 14 à 18 atomes de carbone, telles que des isoparaffines.

Selon un autre mode de réalisation, le fluide hydrocarboné comprend de 60 à 95 % en poids, de préférence de 80 à 98 % en poids, d'isoparaffines choisies dans le groupe consistant en des isoparaffines en C15, des isoparaffines en C16, des isoparaffines en C17, des isoparaffines en C18 et leurs mélanges de deux ou de plusieurs d'entre eux.

Selon un mode de réalisation, le fluide hydrocarboné comprend :
- des isoparaffines ayant 15 atomes de carbone et des isoparaffines ayant 16 atomes de carbone en une quantité totale allant de 80 à 98 % en poids, par rapport au poids total du fluide hydrocarboné, ou
- des isoparaffines ayant 16 atomes de carbone, des isoparaffines ayant 17 atomes de carbone et des isoparaffines ayant 18 atomes de carbone en une quantité totale allant de 80 à 98 % en poids, par rapport au poids total du fluide hydrocarboné, ou
- des isoparaffines ayant 17 atomes de carbone et des isoparaffines ayant 18 atomes de carbone en une quantité totale allant de 80 à 98 % en poids, par rapport au poids total du fluide hydrocarboné.

Selon un mode de réalisation préféré de l'invention, le fluide hydrocarboné comprend des isoparaffines ayant 17 atomes de carbone et des isoparaffines ayant 18 atomes de carbone en une quantité totale allant de 80 à 98 % en poids, par rapport au poids total du fluide hydrocarboné.

Des exemples de fluides hydrocarbonés préférés sont ceux comprenant :
- de 30 à 70 % en poids d'isoparaffines en C15 et de 30 à 70 % en poids d'isoparaffines en C16, de préférence de 40 à 60 % en poids d'isoparaffines en C15 et de 35 à 55 % en poids d'isoparaffines en C16, par rapport au poids total du fluide hydrocarboné,
- de 5 à 25 % d'isoparaffines en C15, de 30 à 70 % d'isoparaffines en C16 et de 10 à 40 % d'isoparaffines en C17, de préférence de 8 à 15 % d'isoparaffines en C15, de 40 à 60 % d'isoparaffines en C16 et de 15 à 25 % d'isoparaffines en C17, par rapport au poids total du fluide hydrocarboné,
- de 5 à 30 % d'isoparaffines en C17 et de 70 à 95 % d'isoparaffines en C18, de préférence de 10 à 25 % d'isoparaffines en C17 et de 70 à 90 % d'isoparaffines en C18, par rapport au poids total du fluide hydrocarboné.

Le fluide hydrocarboné comprend de préférence une teneur en poids de composés naphténiques inférieure ou égale à 3 %, préférentiellement inférieure ou égale à 1 %, plus préférentiellement inférieure ou égale à 0,5 % et encore plus préférentiellement inférieure ou égale à 500 ppm, voire à 100 ppm ou 50 ppm.

Selon un autre mode de réalisation, le fluide hydrocarboné comprend une teneur en poids d'isoparaffines allant de 90 à 100 %, une teneur en poids de paraffines normales allant de 0 à 10 % et une teneur en poids de composés naphténiques inférieure ou égale à 1 %. Préférentiellement le fluide hydrocarboné comprend une teneur en poids allant de 95 à 100 % d'isoparaffines, de 0 à 5 % de paraffines normales et une teneur en poids de composés naphténiques inférieure ou égale à 0,5 %. Plus préférentiellement elle comprend une teneur en poids allant de 98 % à 100 % d'isoparaffines, de 0 à 2 % de paraffines normales et une teneur en poids de composé naphténiques inférieure ou égale à 100 ppm.

Le fluide hydrocarboné est avantageusement exempt de composés aromatiques. Par exempte, on entend une teneur en poids de composés aromatiques inférieure ou égale à 500 ppm, de préférence inférieure ou égale à 300 ppm, préférentiellement inférieure ou égale à 100 ppm, plus préférentiellement inférieure ou égale à 50 ppm et avantageusement inférieure ou égale à 20 ppm mesurée par exemple par spectrométrie UV.

La teneur en poids en isoparaffines, en paraffines normales, en composés naphténiques et/ou en aromatiques du fluide hydrocarboné peut être déterminée selon des méthodes bien connues de l'homme du métier. On peut citer à titre d'exemple non limitatif, une méthode par chromatographie en phase gazeuse.

Selon un autre mode de réalisation, le fluide hydrocarboné comprend une teneur en poids d'isoparaffines allant de 90 à 100 %, une teneur en poids de paraffines normales allant de 0 à 10 %, une teneur en poids de composés naphténiques inférieure ou égale à 1 % et une teneur en poids de composés aromatiques inférieure ou égale à 500 ppm. Préférentiellement le fluide hydrocarboné comprend une teneur en poids allant de 95 à 100 % d'isoparaffines, de 0 à 5 % de paraffines normales, une teneur en poids de composés naphténiques inférieure ou égale à 0,5 % et une teneur en poids de composés aromatiques inférieure ou égale à 300 ppm, de préférence inférieure à 100 ppm, préférentiellement inférieure à 50 ppm et avantageusement inférieure à 20 ppm. Préférentiellement aussi le fluide hydrocarboné comprend une teneur en poids allant de 95 à 100 % d'isoparaffines, de 0 à 5 % de paraffines normales et une teneur en poids de composés aromatiques inférieure ou égale à 100 ppm. Plus préférentiellement elle comprend une teneur en poids allant de 98 % à 100 % d'isoparaffines, de 0 à 2 % de paraffines normales, une teneur en poids de composés naphténiques inférieure ou égale à 100 ppm et une teneur en poids de composés aromatiques inférieure ou égale à 100 ppm.

Le fluide hydrocarboné a également de préférence une teneur en poids de composés soufrés extrêmement basse, typiquement inférieure ou égale à 5 ppm, préférentiellement inférieure ou égale à 3 ppm et plus préférentiellement inférieure ou égale à 0,5 ppm à un niveau trop bas pour être détectée grâce à des analyseurs de basse-teneur en soufre conventionnels.

Le fluide hydrocarboné a également de préférence un point éclair supérieur ou égal à 110°C, préférentiellement supérieur ou égal à 120°C et plus préférentiellement supérieur ou égal à 140°C selon la norme EN ISO 2719. Un point éclair élevé, typiquement supérieure à 110°C permettant entre autres de pallier d'une part les problèmes de sécurité lors du stockage et du transport en évitant une inflammabilité trop sensible du fluide hydrocarboné.

Le fluide hydrocarboné a aussi de préférence une pression de vapeur à 20°C inférieure ou égale à 0,01kPa.

Selon un mode de réalisation, le fluide hydrocarboné a également de préférence un point éclair supérieur ou égal à 110°C selon la norme EN ISO 2719 et une pression de vapeur à 20°C inférieure ou égale à 0,01kPa. Préférentiellement le fluide hydrocarboné a un point éclair supérieur ou égal supérieur ou égal à 120°C et une pression de vapeur à 20°C inférieure ou égale à 0,01kPa. Et plus préférentiellement, elle a un point éclair supérieur ou égal à 140°C et une pression de vapeur à 20°C inférieure ou égale à 0,01kPa.

Le fluide hydrocarboné présente des températures d'ébullition, un point éclair et une pression de vapeur permettant de pallier les problèmes d'inflammabilité, d'odeur et de volatilité.

Le fluide hydrocarboné a en outre de préférence une viscosité cinématique à 40°C inférieure ou égale à 5 cSt, préférentiellement inférieure ou égale à 4 cSt et plus préférentiellement inférieure ou égale à 3,5 cSt selon la norme EN ISO 3104.

Le fluide hydrocarboné peut être obtenu par tout procédé connu de l'homme du métier.

De manière générale le fluide hydrocarboné est une coupe hydrocarbonée qui est issue de la conversion de la biomasse.

Par « issue de la conversion de la biomasse », on entend dans le cadre de la présente invention une coupe hydrocarbonée produite à partir de matières premières d'origine biologique.

Selon un mode de réalisation, le fluide hydrocarboné comprend :
- une teneur en poids d'isoparaffines allant de 95 à 100 % et préférentiellement de 98 % à 100 % par rapport au poids total du fluide hydrocarboné, et
- une teneur en poids de paraffines normales inférieure ou égale à 5 % et préférentiellement inférieure ou égale à 2 % par rapport au poids total du fluide hydrocarboné ; et
- une teneur en poids de composés naphténiques inférieure ou égale à 0,5 % et préférentiellement inférieure ou égale à 100 ppm par rapport au poids total du fluide hydrocarboné ; et
- une teneur en poids de composés aromatiques inférieure ou égale à 300 ppm, préférentiellement inférieure ou égale à 100 ppm, plus préférentiellement inférieure ou égale à 50 ppm et avantageusement inférieure ou égale à 20 ppm, par rapport au poids total du fluide hydrocarboné.

Selon un mode de réalisation particulier, le fluide hydrocarboné comprend une teneur en poids d'isoparaffines allant de 98 % à 100 %, par rapport au poids total du fluide hydrocarboné, et une viscosité cinématique à 40°C inférieure ou égale à 5 cSt, de préférence inférieure ou égale à 4 cSt et préférentiellement inférieure ou égale à 3,5 cSt.

### Inhibiteur de radicaux

Une composition lubrifiante mise en oeuvre selon l'invention peut en outre comprendre au moins un inhibiteur de radicaux.

De tels inhibiteurs de radicaux sont en soi connus de l'homme de l'art et peuvent avoir différentes natures chimiques et en particulier appartenir à différentes familles chimiques.

Parmi les inhibiteurs de radicaux, on peut notamment citer les inhibiteurs de radicaux phosphorés.

Parmi les inhibiteurs de radicaux phosphorés on distingue les composés pour lesquels le phosphore est un P(V) ou phosphore pentavalent, en particulier des phosphates tels que le triéthylphosphate, le triméthylphosphate, les alkylphosphates éventuellement fluorés ou encore les arylphosphates, des phosphazènes tels que l'hexaméthoxycyclotriphosphazène, et les composés pour lesquels le phosphore est un P(III) ou phosphore trivalent, en particulier des phosphites tels que le tris(2,2,2-trifluoroéthyl)phosphite.

### Autres additifs

Selon une variante de l'invention, une composition mise en oeuvre selon l'invention peut comprendre en outre des additifs modulant les propriétés de l'huile de base.

De tels additifs peuvent être choisis parmi les modificateurs de frottements, les détergents, les additifs anti-usure, les additifs extrême-pression, les dispersants, les antioxydants, les améliorants du point d'écoulement, les anti-mousse et leurs mélanges.

Ces additifs peuvent être introduits isolément et/ou sous la forme d'un mélange à l'image de ceux déjà disponibles à la vente pour les formulations de lubrifiants commerciaux pour moteurs de véhicules, de niveau de performance tels que définis par l'ACEA (Association des Constructeurs Européens d'Automobiles) et/ou l'API (American Petroleum Institute), bien connus de l'homme du métier.

Les additifs anti-usure et les additifs extrême pression protègent les surfaces en frottement par formation d'un film protecteur adsorbé sur ces surfaces.

Il existe une grande variété d'additifs anti-usure. De manière préférée pour la composition mise en oeuvre selon l'invention, les additifs anti-usure sont choisis parmi des additifs phosphosoufrés comme les alkylthiophosphates métalliques, en particulier les alkylthiophosphates de zinc, et plus spécifiquement les dialkyldithiophosphates de zinc ou ZnDTP. Les composés préférés sont de formule Zn((SP(S)(OR²)(OR³))₂, dans laquelle R² et R³, identiques ou différents, représentent indépendamment un groupement alkyle, préférentiellement un groupement alkyle comportant de 1 à 18 atomes de carbone.

Les phosphates d'amines sont également des additifs anti-usure qui peuvent être employés dans une composition mise en oeuvre selon l'invention. Toutefois, le phosphore apporté par ces additifs peut agir comme poison des systèmes catalytiques des automobiles car ces additifs sont générateurs de cendres. On peut minimiser ces effets en substituant partiellement les phosphates d'amines par des additifs n'apportant pas de phosphore, tels que, par exemple, les polysulfures, notamment les oléfines soufrées.

Une composition lubrifiante mise en oeuvre selon l'invention peut comprendre de 0,01 à 6 % en poids, préférentiellement de 0,05 à 4 % en poids, plus préférentiellement de 0,1 à 2 % d'additifs anti-usure et d'additifs extrême-pression, en masse par rapport au poids total de composition.

Selon un mode de réalisation particulier, une composition lubrifiante mise en oeuvre selon l'invention est exempte d'additifs anti-usure et d'additifs extrême-pression. En particulier, une composition lubrifiante mise en oeuvre selon l'invention est avantageusement exempte d'additifs phosphatés.

Une composition lubrifiante mise en oeuvre selon l'invention peut comprendre au moins un additif modificateur de frottement. L'additif modificateur de frottement peut être choisi parmi un composé apportant des éléments métalliques et un composé exempt de cendres. Parmi les composés apportant des éléments métalliques, on peut citer les complexes de métaux de transition tels que Mo, Sb, Sn, Fe, Cu, Zn dont les ligands peuvent être des composés hydrocarbonés comprenant des atomes d'oxygène, d'azote, de soufre ou de phosphore. Les additifs modificateurs de frottement exempt de cendres sont généralement d'origine organique et peuvent être choisis parmi les monoesters d'acides gras et de polyols, les amines alcoxylées, les amines grasses alcoxylées, les époxydes gras, les époxydes gras de borate ; les amines grasses ou les esters de glycérol d'acide gras. Selon l'invention, les composés gras comprennent au moins un groupement hydrocarboné comprenant de 10 à 24 atomes de carbone.

Une composition lubrifiante mise en oeuvre selon l'invention peut comprendre de 0,01 à 2 % en poids ou de 0,01 à 5 % en poids, préférentiellement de 0,1 à 1,5 % en poids ou de 0,1 à 2 % en poids d'additif modificateur de frottement, par rapport au poids total de la composition.

De manière avantageuse, une composition lubrifiante mise en oeuvre selon l'invention est exempte d'additif modificateur de frottement.

Une composition lubrifiante mise en oeuvre selon l'invention peut comprendre au moins un additif antioxydant.

L'additif antioxydant permet généralement de retarder la dégradation de la composition en service. Cette dégradation peut notamment se traduire par la formation de dépôts, par la présence de boues ou par une augmentation de la viscosité de la composition.

Les additifs antioxydants agissent notamment comme inhibiteurs radicalaires ou destructeurs d'hydropéroxydes. Parmi les additifs antioxydants couramment employés, on peut citer les additifs antioxydants de type phénolique, les additifs antioxydants de type aminé, les additifs antioxydants phosphosoufrés. Certains de ces additifs antioxydants, par exemple les additifs antioxydants phosphosoufrés, peuvent être générateurs de cendres. Les additifs antioxydants phénoliques peuvent être exempt de cendres ou bien être sous forme de sels métalliques neutres ou basiques. Les additifs antioxydants peuvent notamment être choisis parmi les phénols stériquement encombrés, les esters de phénol stériquement encombrés et les phénols stériquement encombrés comprenant un pont thioéther, les diphénylamines, les diphénylamines substituées par au moins un groupement alkyle en C₁-C₁₂, les N,N'-dialkyle-aryle-diamines et leurs mélanges.

De préférence selon l'invention, les phénols stériquement encombrés sont choisis parmi les composés comprenant un groupement phénol dont au moins un carbone vicinal du carbone portant la fonction alcool est substitué par au moins un groupement alkyle en C₁- C₁₀, de préférence un groupement alkyle en C₁-C₆, de préférence un groupement alkyle en C₄, de préférence par le groupement tert-butyle.

Les composés aminés sont une autre classe d'additifs antioxydants pouvant être utilisés, éventuellement en combinaison avec les additifs antioxydants phénoliques. Des exemples de composés aminés sont les amines aromatiques, par exemple les amines aromatiques de formule NR⁴R⁵R⁶ dans laquelle R⁴ représente un groupement aliphatique ou un groupement aromatique, éventuellement substitué, R⁵ représente un groupement aromatique, éventuellement substitué, R⁶ représente un atome d'hydrogène, un groupement alkyle, un groupement aryle ou un groupement de formule R⁷S(O)_{z}R⁸ dans laquelle R⁷ représente un groupement alkylène ou un groupement alkenylène, R⁸ représente un groupement alkyle, un groupement alcényle ou un groupement aryle et z représente 0, 1 ou 2.

Des alkyl phénols sulfurisés ou leurs sels de métaux alcalins et alcalino-terreux peuvent également être utilisés comme additifs antioxydants.

Une autre classe d'additifs antioxydants est celle des composés cuivrés, par exemples les thio- ou dithio-phosphates de cuivre, les sels de cuivre et d'acides carboxyliques, les dithiocarbamates, les sulphonates, les phénates, les acétylacétonates de cuivre. Les sels de cuivre I et II, les sels d'acide ou d'anhydride succiniques peuvent également être utilisés.

Une composition lubrifiante mise en oeuvre selon l'invention peut contenir tous types d'additifs antioxydants connus de l'homme du métier.

De manière avantageuse, une composition lubrifiante mise en oeuvre selon l'invention comprend au moins un additif antioxydant exempt de cendres.

Une composition lubrifiante mise en oeuvre selon l'invention peut comprendre de 0,5 à 2 % en poids d'au moins un additif antioxydant, par rapport au poids total de la composition.

Une composition lubrifiante mise en oeuvre selon l'invention peut également comprendre au moins un additif détergent.

Les additifs détergents permettent généralement de réduire la formation de dépôts à la surface des pièces métalliques par dissolution des produits secondaires d'oxydation et de combustion.

Les additifs détergents utilisables dans une composition lubrifiante mise en oeuvre selon l'invention sont généralement connus de l'homme de métier. Les additifs détergents peuvent être des composés anioniques comprenant une longue chaîne hydrocarbonée lipophile et une tête hydrophile. Le cation associé peut être un cation métallique d'un métal alcalin ou alcalino-terreux.

Les additifs détergents sont préférentiellement choisis parmi les sels de métaux alcalins ou de métaux alcalino-terreux d'acides carboxyliques, les sulfonates, les salicylates, les naphténates, ainsi que les sels de phénates. Les métaux alcalins et alcalino-terreux sont préférentiellement le calcium, le magnésium, le sodium ou le baryum.

Ces sels métalliques comprennent généralement le métal en quantité stoechiométrique ou bien en excès, donc en quantité supérieure à la quantité stoechiométrique. Il s'agit alors d'additifs détergents surbasés ; le métal en excès apportant le caractère surbasé à l'additif détergent est alors généralement sous la forme d'un sel métallique insoluble dans l'huile, par exemple un carbonate, un hydroxyde, un oxalate, un acétate, un glutamate, préférentiellement un carbonate.

Une composition lubrifiante mise en oeuvre selon l'invention peut par exemple comprendre de 2 à 4 % en poids d'additif détergent, par rapport au poids total de la composition.

Une composition lubrifiante mise en oeuvre selon l'invention peut également comprendre au moins un additif abaisseur de point d'écoulement.

En ralentissant la formation de cristaux de paraffine, les additifs abaisseurs de point d'écoulement améliorent généralement le comportement à froid de la composition.

Comme exemple d'additifs abaisseurs de point d'écoulement, on peut citer les polyméthacrylates d'alkyle, les polyacrylates, les polyarylamides, les polyalkylphénols, les polyalkylnaphtalènes, les polystyrènes alkylés.

Également, une composition lubrifiante mise en oeuvre selon l'invention peut comprendre au moins un agent dispersant.

L'agent dispersant peut être choisi parmi les bases de Mannich, les succinimides et leurs dérivés.

Une composition lubrifiante mise en oeuvre selon l'invention peut par exemple comprendre de 0,2 à 10 % en poids d'agent dispersant, par rapport au poids total de la composition.

Il appartient à l'homme du métier d'ajuster les proportions des différents constituants de la composition, des différents additifs définis précédemment, pour respecter la viscosité requise selon l'invention, et éventuellement la densité de la composition.

### APPLICATION

Comme indiqué précédemment, une composition telle que définie selon l'invention peut être mise en oeuvre, de par ses propriétés conjointes en termes de lubrification et de refroidissement, à la fois comme fluide de lubrification du moteur et de la transmission, et comme fluide de refroidissement pour un système de propulsion d'un véhicule électrique ou hybride, et plus particulièrement du moteur, de l'électronique de puissance et des batteries.

Ainsi, la présente invention concerne, selon l'un de ses aspects, l'utilisation, à titre de fluide de lubrification et de fluide de refroidissement pour un système de propulsion d'un véhicule électrique ou hybride, d'une composition comprenant au moins :
(i) au moins une huile de base,
(ii) au moins un diester de formule (I), distinct de l'huile de base (i) :

   R^{a}-C(O)-O-([C(R)₂]ₙ-O)ₛ-C(O)-R^{b} (I)
dans laquelle :
- R représentent, indépendamment les uns des autres, un atome d'hydrogène ou un groupe (C₁-C₅)alkyle, linéaire ou ramifié, en particulier un groupe méthyle, éthyle ou propyle, notamment méthyle ;
- s vaut 1 ou 2 ;
- n vaut 1, 2 ou 3 ; étant entendu que, lorsque s est différent de 1, n peuvent être identiques ou différents ; et
- R^{a} et R^{b}, identiques ou différents, représentent indépendamment les uns des autres, des groupements hydrocarbonés, saturés ou insaturés, linéaires ou ramifiés, présentant un enchaînement linéaire de 2 à 11 atomes de carbone, de préférence de 3 à 8 atomes de carbone ;

sous réserve que, lorsque s vaut 2 et n, identiques, valent 2, au moins l'un des groupe R représente un groupe (C₁-C₅)alkyle, linéaire ou ramifié ; et
sous réserve que, lorsque s vaut 1 et n vaut 3, au moins l'un des groupes R lié au carbone en position bêta des atomes d'oxygène des fonctions esters représente un atome d'hydrogène ; le ou les diester(s) de formule (I) étant présents dans une teneur comprise entre 1 et 25 % en poids, par rapport au poids total de la composition.

Par « fluide de refroidissement » au sens de la présente invention, on entend désigner un fluide apte à dissiper la chaleur générée par un système de propulsion d'un véhicule électrique ou hybride. Plus précisément, un tel fluide est caractérisé par une capacité d'absorption thermique accrue lors de son contact avec une pièce en échauffement.

En particulier, une composition mise en oeuvre selon l'invention permet d'optimiser les échanges thermiques avec le système de propulsion d'un véhicule électrique ou hybride. Elle présente avantageusement une capacité calorifique mesurée à 50°C et à pression atmosphérique supérieure à 1,8 kJ/kg/K , de préférence supérieure à 2 kJ/kg/K.

De manière avantageuse, la composition mise en oeuvre selon l'invention est mise en contact avec la batterie par toute mise en oeuvre qui permet un contact direct entre les cellules de la batterie et ladite composition, en particulier par immersion ou semi-immersion.

Alternativement, la composition lubrifiante mise en oeuvre selon l'invention est avantageusement mise en contact direct avec les batteries par des méthodes décrites ci-après.

A titre de batteries adaptées pour les systèmes de propulsion d'un véhicule électrique ou hybride, on cite les batteries Li-ion ou encore les batteries au Nickel-Cadmium.

En particulier, l'invention concerne l'utilisation d'une composition telle que définie précédemment pour lubrifier et refroidir un système de propulsion d'un véhicule électrique ou hybride.

Un moteur électrique est typiquement alimenté par une batterie électrique (2). Les batteries lithium-ion sont les plus répandues dans le domaine des véhicules électriques. Le développement de batteries de plus en plus puissantes et dont la taille est de plus en plus réduite implique l'apparition du problème de refroidissement de cette batterie. En effet, dès lors que la batterie dépasse des températures de l'ordre de 50 à 60°C, il existe un fort risque d'inflammation, voire d'explosion, de la batterie. Il existe également un besoin de maintenir la batterie à une température supérieure à environ 0°C afin de permettre un fonctionnement optimal de la batterie.

Comme représenté schématiquement en Figure 1, le système de propulsion d'un véhicule électrique ou hybride, comprend notamment la partie moteur électrique (1). Celui-ci comprend typiquement une électronique de puissance (11) reliée à un stator (13) et un rotor (14).

Le stator comprend des bobines, en particulier des bobines de cuivre, qui sont alimentées alternativement par un courant électrique. Ceci permet de générer un champ magnétique tournant. Le rotor comprend lui-même des bobines, des aimants permanents ou d'autres matériaux magnétiques, et est mis en rotation par le champ magnétique tournant.

L'électronique de puissance (11), le stator (13) et le rotor (14) d'un système de propulsion (1) sont des pièces dont la structure est complexe et génère une forte quantité de chaleur au cours du fonctionnement du moteur. Il est donc impératif d'assurer un refroidissement du moteur électrique, et l'électronique de puissance.

Également, le roulement (12), généralement intégré entre le stator (13) et le rotor (14), est soumis à de fortes contraintes mécaniques et pose des problèmes d'usure par fatigue. Il est donc nécessaire de lubrifier le roulement afin d'augmenter sa durée de vie.

Ainsi, une composition telle que décrite précédemment permet de lubrifier la transmission, en particulier, le réducteur, dans un véhicule électrique ou hybride.

Il est entendu que les utilisations décrites ci-dessus peuvent être combinées, une composition telle que décrite précédemment pouvant être utilisée à la fois à titre de lubrifiant et de fluide de refroidissement pour le moteur, la batterie et la transmission d'un véhicule électrique ou hybride.

Ainsi, l'invention concerne l'utilisation d'une composition telle que décrite précédemment pour refroidir la batterie, le moteur, et l'électronique de puissance pour lubrifier le moteur et la transmission et pour sécuriser contre le feu un système de propulsion d'un véhicule électrique ou hybride, et notamment la batterie.

En particulier, une telle composition permet de refroidir l'électronique de puissance et/ou le rotor et/ou le stator du moteur électrique. Elle peut assurer également une lubrification des roulements situés entre le rotor et le stator d'un moteur électrique d'un véhicule électrique ou hybride.

Ainsi, l'invention présente l'avantage de permettre la mise en oeuvre d'une unique composition associant les propriétés de refroidissement et de lubrification du système de propulsion d'un véhicule électrique ou hybride dans son ensemble.

En outre, la mise en oeuvre d'au moins un diester de formule (I) telle que définie ci-dessus dans au moins une huile de base, permet d'augmenter la température d'inflammabilité de l'huile de base.

Ainsi, l'invention concerne également l'utilisation d'au moins un diester de formule (I) dans une composition comprenant au moins une huile de base, pour améliorer les propriétés ininflammables de la composition.

L'invention concerne encore un procédé de refroidissement et de lubrification d'un système de propulsion d'un véhicule électrique ou hybride comprenant au moins une étape de mise en contact d'au moins une pièce mécanique dudit système, notamment d'au moins une cellule de batterie, en particulier une batterie Lithium-ion ou Nickel-Cadmium, avec une composition telle que définie ci-dessus.

Selon un mode de réalisation particulier, l'étape de mise en contact consiste en une immersion ou en une semi-immersion, statique ou en circulation, de la batterie dans ladite composition ou encore en une injection de ladite composition à la surface de la batterie.

L'ensemble des caractéristiques et préférences décrites pour la composition lubrifiante utilisée selon l'invention ainsi que pour ses utilisations s'applique également à ce procédé.

Le refroidissement par une composition lubrifiante définie selon l'invention peut être mise en oeuvre par toute méthode connue de l'homme du métier.

La batterie peut être en immersion ou semi-immersion, statique ou en circulation, dans ladite composition.

Comme exemples de mise en contact direct, on peut citer le refroidissement par injection, jet, par sprayage ou encore par formation d'un brouillard à partir de la composition mise en oeuvre selon l'invention sous pression et par gravité sur la batterie.

De manière avantageuse, la composition est injectée par jet sous assez haute pression dans les zones à refroidir du système de propulsion. Avantageusement, le cisaillement résultant de cette injection permet de réduire la viscosité du fluide au niveau de la zone d'injection, par rapport à la viscosité cinématique au repos, et ainsi, d'accroître encore le potentiel refroidissement de la composition.

Ainsi, la présente invention concerne également un procédé de refroidissement et de lubrification d'un système de propulsion d'un véhicule électrique ou hybride tel que défini ci-dessus dans lequel la pièce mécanique est au moins une batterie, en immersion ou semi-immersion, statique ou en circulation, dans ladite composition ou ladite composition est mise en contact direct avec les batteries par injection, jet, par sprayage ou encore par formation d'un brouillard à partir de ladite composition sous pression et par gravité sur la batterie.

De plus, des systèmes de circulation d'huile couramment utilisés dans les moteurs électriques peuvent être employés, comme par exemple décrit dans le document WO 2015/116496.

### EXEMPLES

### Exemple 1 : Mesure des propriétés rhéologiques et thermiques de diesters conformes à l'invention

### Mesure des propriétés rhéologiques :

Les propriétés rhéologiques des esters sont quantifiées par mesure de leurs viscosités cinématiques à 40°C (KV40) et à 100°C (KV100), exprimées en mm²/s, déterminées selon la norme ASTM D445.

### Mesure des propriétés thermiques :

Les propriétés thermiques des esters peuvent être évaluées par mesure de leur conductivité thermique et de leur capacité thermique (ou capacité calorifique).

La conductivité thermique est mesurée selon la norme ASTM D7896.

La capacité thermique est mesurée selon la norme ASTM E1269.

### Nature des diesters

Les propriétés thermiques et rhéologiques ont été mesurées pour les diesters obtenus par estérification entre les alcools et les acides indiqués dans le tableau 1 ci-dessous.

**Tableau 1 - Nature des diesters testés**

| Ester | Alcool | Acide |
|---|---|---|
| **E1** | Dipropylène glycol (DPG) | Aide nonanoïque / acide dodécanoïque (50/50) |
| **E2** | DPG | Acide nonanoïque |
| **E3** | Diéthylène glycol (DEG) | Acide nonanoïque |
| **E4** | Néopentyle glycol (NPG) | Acide nonanoïque |
| **E5** | NPG | Acide isononanoïque |
| **E6** | NPG | Acide 2-éthylhexanoïque |

### Résultats

Les résultats obtenus sont compilés dans le tableau 2 ci-dessous

**Tableau 2 - Propriétés rhéologiques et thermiques des diesters**

| Ester | KV40 (mm²/s) | KV100 (mm²/s) | λ à 30 °C (mW/Km) | λ à 130 °C (mW/Km) | Cp à 20 °C (J/K) | Cp à 80°C (J/K) |
|---|---|---|---|---|---|---|
| **E1** | 11,7 | 3,2 | 150,5 | 131,0 | 1,930 | 2,086 |
| **E2** | 9,1 | 2,7 | 147,1 | 127,0 | 1,900 | 2,070 |
| **E3** | 8,6 | 2,6 | 154,9 | 133,7 | - | 2,150 |
| **E4** | 8,7 | 2,6 | 141,8 | 123,2 | 1,970 | 2,180 |
| **E5** | 13,2 | 3,2 | 113,2 | 99,6 | 1,870 | 2,100 |
| **E6** | 7,5 | 2,1 | 128,2 | 111,2 | 1,837 | 2,040 |

Il ressort des résultats ci-dessus que les diesters de formule (I) conformes à l'invention présentent des propriétés rhéologiques et des valeurs de conductivité thermique et de capacité thermique permettant leur mise en oeuvre dans une composition lubrifiante à des fins de lubrification et de refroidissement des pièces d'un système de propulsion d'un véhicule électrique ou hybride.

### Exemple 2 : Mesure de volatilité de diesters conformes et non conformes à l'invention

### Méthode de mesure

La volatilité des diesters est quantifiée par analyse thermogravimétrique (ATG), plus particulièrement réalisée selon la norme ASTM D6375.

Le diester à tester est chauffé rapidement à une température comprise entre 247 °C et 249 °C puis maintenu à cette température. L'appareil de mesure thermogravimétrique enregistre la perte en masse, en pourcent, de l'échantillon en fonction du temps, liée à son évaporation.

Les résultats obtenus correspondent au temps nécessaire, exprimé en secondes, pour que 20% de l'ester initial soit évaporé. Plus le temps est important, plus l'évaporation du produit est lente et donc plus la durée de vie du lubrifiant est importante.

### Nature des diester

Les diesters **E2** et **E3** définis ci-dessus, conformes à l'invention ont été testés, ainsi que deux diesters non conformes à l'invention, **E8** et **E9.**

Les diesters **E8** et **E9** sont obtenus par estérification entre le triéthylène glycol et respectivement l'acide heptanoïque et l'acide 2-éthylhexanoïque.

### Résultats

Les résultats obtenus sont compilés dans le tableau 3 ci-dessous

**Tableau 3 - Volatilité des diesters**

| Ester | Temps nécessaire à l'évaporation de 20% de produit (s) |
|---|---|
| **E2** (invention) | 461 |
| **E3** (invention) | 490 |
| **E8** (hors invention) | 361 |
| **E9** (hors invention) | 390 |

Les diesters **E2** et **E3**, conformes à l'invention, présentent des durées d'évaporation supérieures aux diesters **E8** et **E9** non conformes à l'invention.

Ces résultats démontrent qu'un diester de formule (I) conforme à l'invention confère à la composition dans laquelle il est mis en oeuvre, des propriétés avantageuses, en particulier de lubrification et de refroidissement, sur une durée d'utilisation plus importante, augmentant de ce fait l'intervalle de vidange.

## Revendications

1. Utilisation, pour refroidir et lubrifier un système de propulsion d'un véhicule électrique ou hybride, d'une composition comprenant au moins :
(i) au moins une huile de base ; et
(ii) au moins un diester de formule (I), distinct de l'huile de base (i) :
R^{a}-C(O)-O-([C(R)₂]ₙ-O)ₛ-C(O)-R^{b} (I)
dans laquelle :
- R représentent, indépendamment les uns des autres, un atome d'hydrogène ou un groupe (C₁-C₅)alkyle, linéaire ou ramifié, en particulier un groupe méthyle, éthyle ou propyle, notamment méthyle ;
- s vaut 1 ou 2 ;
- n vaut 1, 2 ou 3 ; étant entendu que, lorsque s est différent de 1, n peuvent être identiques ou différents ; et
- R^{a} et R^{b}, identiques ou différents, représentent indépendamment les uns des autres, des groupements hydrocarbonés, saturés ou insaturés, linéaires ou ramifiés, présentant un enchaînement linéaire de 2 à 11 atomes de carbone, de préférence de 3 à 8 atomes de carbone ;
sous réserve que, lorsque s vaut 2 et n, identiques, valent 2, au moins l'un des groupe R représente un groupe (C₁-C₅)alkyle, linéaire ou ramifié ; et
sous réserve que, lorsque s vaut 1 et n vaut 3, au moins l'un des groupes R lié au carbone en position bêta des atomes d'oxygène des fonctions esters représente un atome d'hydrogène ;
le ou les diester(s) de formule (I) étant présents dans une teneur comprise entre 1 et 25 % en poids, par rapport au poids total de la composition.

2. Utilisation selon la revendication précédente, **caractérisée en ce que** l'huile de base présente une viscosité cinématique, mesurée à 100 °C selon la norme ASTM D445 allant de 1,5 à 8 mm²/s, en particulier de 1,5 à 6,1 mm²/s, plus particulièrement de 1,5 à 4,1 mm²/s, encore plus particulièrement de 1,5 à 2,1 mm²/s.

3. Utilisation selon la revendication 1 ou 2, dans laquelle l'huile de base est choisie parmi les huiles synthétiques, telles certains esters d'acides carboxyliques et d'alcools, les polyalphaoléfines et les polyalkylène glycol obtenus par polymérisation ou copolymérisation d'oxydes d'alkylène comprenant de 2 à 8 atomes de carbone, en particulier de 2 à 4 atomes de carbone.

4. Utilisation selon l'une quelconque des revendications précédentes, **caractérisée en ce que** la composition comprend de 60 % à 99,5 % en poids, de préférence de 70 % à 98 %, encore plus préférentiellement de 80 % à 98 %, avantageusement de 90 % à 97 % en poids d'huile de base, ou mélange d'huiles de base.

5. Utilisation selon l'une quelconque des revendications précédentes, dans laquelle le diester de formule (I) est un diester de formule (I') :
R^{a}-C(O)-O-([C(R)₂]ₙ-O)-([C(R')₂]ₘ-O)ₛ₋₁-C(O)-R^{b} (I')
dans laquelle :
- R et R' représentent, indépendamment les uns des autres, un atome d'hydrogène ou un groupe (C₁-C₅)alkyle, linéaire ou ramifié, en particulier un groupe méthyle, éthyle ou propyle, notamment un groupe méthyle ;
- s vaut 1 ou 2 ;
- n vaut 2 ;
- m vaut 2 ;
- R^{a} et R^{b}, identiques ou différents, représentent indépendamment les uns des autres, des groupements hydrocarbonés, saturés ou insaturés, linéaires ou ramifiés, présentant un enchaînement linéaire de 2 à 11 atomes de carbone, de préférence de 3 à 8 atomes de carbone ;
sous réserve que, lorsque s vaut 2, au moins l'un des groupes R ou R' représente un groupe (C₁-C₅)alkyle, linéaire ou ramifié.

6. Utilisation selon l'une quelconque des revendications précédentes dans laquelle le ou les diester(s) de formule (I) sont présents dans une teneur comprise entre 5 et 25 % en poids, par rapport au poids total de la composition et plus particulièrement entre 10 et 25 % en poids.

7. Utilisation selon l'une quelconque des revendications précédentes, dans laquelle la composition comprend en outre au moins un additif choisi parmi les fluides hydrocarbonés ayant un point d'ébullition supérieur ou égal à 50°C, les inhibiteurs de radicaux, les modificateurs de frottements, les détergents, les additifs anti-usure, les additifs extrême-pression, les dispersants, les antioxydants, les améliorants du point d'écoulement, les anti-mousse et leurs mélanges.

8. Procédé de refroidissement et de lubrification d'un système de propulsion d'un véhicule électrique ou hybride comprenant au moins une étape de mise en contact d'au moins une pièce mécanique dudit système, notamment d'au moins une cellule de batterie, en particulier d'une batterie Lithium-ion ou Nickel-Cadmium, avec une composition telle que définie dans l'une quelconque des revendications 1 à 7.

9. Procédé selon la revendication précédente, **caractérisé en ce que** ladite au moins une pièce mécanique est au moins une batterie, en immersion ou semi-immersion, statique ou en circulation, dans ladite composition ou ladite composition est mise en contact direct avec les batteries par injection, jet, par sprayage ou encore par formation d'un brouillard à partir de ladite composition sous pression et par gravité sur la batterie.

10. Utilisation d'un diester de formule (I) tel que défini selon l'une quelconque des revendications 1, 5 et 6, dans une composition de refroidissement et de lubrification d'un système de propulsion d'un véhicule électrique ou hybride, comprenant au moins une huile de base, pour augmenter l'intervalle de vidange du système de propulsion, en particulier de sa batterie, le ou les diester(s) de formule (I) étant présents dans une teneur comprise entre 1 et 25 % en poids, par rapport au poids total de la composition.

11. Utilisation, pour refroidir et lubrifier un système de propulsion d'un véhicule électrique ou hybride, d'une composition comprenant au moins :
(i) au moins une huile de base ; et
(ii) au moins un diester de formule (I), distinct de l'huile de base (i) :
R^{a}-C(O)-O-([C(R)₂]ₙ-O)ₛ-C(O)-R^{b} (I)
dans laquelle :
- R représentent, indépendamment les uns des autres, un atome d'hydrogène ou un groupe (C₁-C₅)alkyle, linéaire ou ramifié, en particulier un groupe méthyle, éthyle ou propyle, notamment méthyle ;
- s vaut 1 ou 2 ;
- n vaut 1, 2 ou 3 ; étant entendu que, lorsque s est différent de 1, n peuvent être identiques ou différents ; et
- R^{a} et R^{b}, identiques ou différents, représentent indépendamment les uns des autres, des groupements hydrocarbonés, saturés ou insaturés, linéaires ou ramifiés, présentant un enchaînement linéaire de 2 à 11 atomes de carbone, de préférence de 3 à 8 atomes de carbone ;
ledit diester étant obtenu par réaction d'estérification entre le diéthylène glycol et un ou plusieurs acides carboxyliques R^{a}-COOH et R^{b}-COOH,
de préférence le diester ou mélange de diester étant obtenu par réaction d'estérification entre le diéthylène glycol et l'acide nonanoïque ; le ou les diester(s) de formule (I) étant présents dans une teneur comprise entre 1 et 25 % en poids, par rapport au poids total de la composition.

12. Utilisation, pour refroidir et lubrifier un système de propulsion d'un véhicule électrique ou hybride, d'une composition comprenant au moins :
(i) au moins une huile de base ; et
(ii) au moins un diester de formule (I), distinct de l'huile de base (i) :
R^{a}-C(O)-O-([C(R)₂]ₙ-O)ₛ-C(O)-R^{b} (I)
dans laquelle :
- R représentent, indépendamment les uns des autres, un atome d'hydrogène ou un groupe (C₁-C₅)alkyle, linéaire ou ramifié, en particulier un groupe méthyle, éthyle ou propyle, notamment méthyle ;
- s vaut 1 ou 2 ;
- n vaut 1, 2 ou 3 ; étant entendu que, lorsque s est différent de 1, n peuvent être identiques ou différents ; et
- R^{a} et R^{b}, identiques ou différents, représentent indépendamment les uns des autres, des groupements hydrocarbonés, saturés ou insaturés, linéaires ou ramifiés, présentant un enchaînement linéaire de 2 à 11 atomes de carbone, de préférence de 3 à 8 atomes de carbone ;
ledit diester étant obtenu par réaction d'estérification entre le néopentyle glycol et un ou plusieurs acides carboxyliques R^{a}-COOH et R^{b}-COOH,
de préférence, le diester ou mélange de diester étant obtenu par réaction d'estérification entre le néopentyle glycol et l'acide nonanoïque, l'acide isononanoïque, l'acide 2-éthylhexanoïque et leurs mélanges ;
le ou les diester(s) de formule (I) étant présents dans une teneur comprise entre 1 et 25 % en poids, par rapport au poids total de la composition.

## Patentansprüche

1. Verwendung einer Zusammensetzung zum Kühlen und Schmieren eines Antriebssystems eines Elektro- oder Hybridfahrzeugs, wobei die Zusammensetzung mindestens Folgendes umfasst:
(i) mindestens ein Grundöl und
(ii) mindestens einen Diester der Formel (I), der von dem Grundöl (i) verschieden ist:
R^{a}-C(O)-O-([C(R)₂]ₙ-O)ₛ-C(O)-R^{b} (I)
wobei:
- die Variablen R unabhängig voneinander für ein Wasserstoffatom oder eine lineare oder verzweigte (C₁-C₅)-Alkylgruppe, speziell eine Methyl-, Ethyl- oder Propylgruppe, insbesondere eine Methylgruppe, stehen;
- s gleich 1 oder 2 ist;
- n gleich 1, 2 oder 3 ist; wobei es sich versteht, dass dann, wenn s von 1 verschieden ist, die Variablen n gleich oder verschieden sein können; und
- R^{a} und R^{b}, die gleich oder verschieden sind, unabhängig voneinander für gesättigte oder ungesättigte, lineare oder verzweigte Kohlenwasserstoffgruppen mit einer linearen Kette aus 2 bis 11 Kohlenstoffatomen, vorzugsweise 3 bis 8 Kohlenstoffatomen, stehen;
mit der Maßgabe, dass dann, wenn s gleich 2 ist und die Variablen n, die gleich sind, gleich 2 sind, mindestens eine der Gruppen R für eine lineare oder verzweigte (C₁-C₅)-Alkylgruppe steht; und
mit der Maßgabe, dass dann, wenn s gleich 1 ist und n gleich 3 ist, mindestens eine der an den Kohlenstoff in der beta-Position der Sauerstoffatome der Esterfunktionen gebundenen Gruppen R für ein Wasserstoffatom steht;
wobei der Diester bzw. die Diester der Formel (I) in einem Gehalt zwischen 1 und 25 Gew.-%, bezogen auf das Gesamtgewicht der Zusammensetzung, vorliegt bzw. vorliegen.

2. Verwendung nach dem vorhergehenden Anspruch, **dadurch gekennzeichnet, dass** das Grundöl eine bei 100 °C gemäß ASTM-Norm D445 gemessene kinematische Viskosität im Bereich von 1,5 bis 8 mm²/s, speziell von 1,5 bis 6,1 mm²/s, spezieller von 1,5 bis 4,1 mm²/s und noch spezieller von 1,5 bis 2,1 mm²/s aufweist.

3. Verwendung nach Anspruch 1 oder 2, wobei das Grundöl aus synthetischen Ölen, wie bestimmten Estern von Carbonsäuren und Alkoholen, Polyalphaolefinen und durch Polymerisation oder Copolymerisation von Alkylenoxiden mit 2 bis 8 Kohlenstoffatomen und speziell 2 bis 4 Kohlenstoffatomen erhaltenen Polyalkylenglykolen ausgewählt ist.

4. Verwendung nach einem der vorhergehenden Ansprüche, **dadurch gekennzeichnet, dass** die Zusammensetzung 60 bis 99,5 Gew.-%, vorzugsweise 70 bis 98 Gew.-%, noch weiter bevorzugt 80 bis 98 Gew.-%, vorteilhafterweise 90 bis 97 Gew.-%, Grundöl oder Gemisch von Grundölen umfasst.

5. Verwendung nach einem der vorhergehenden Ansprüche, wobei es sich bei dem Diester der Formel (I) um einen Diester der Formel (I') handelt:
R^{a}-C(O)-O-([C(R)₂]ₙ-O)-([C(R')₂]ₘ-O)ₛ₋₁-C(O)-R^{b} (I')
wobei:
- die Variablen R und R' unabhängig voneinander für ein Wasserstoffatom oder eine lineare oder verzweigte (C₁-C₅)-Alkylgruppe, speziell eine Methyl-, Ethyl- oder Propylgruppe, insbesondere eine Methylgruppe, stehen;
- s gleich 1 oder 2 ist;
- n gleich 2 ist;
- m gleich 2 ist;
- R^{a} und R^{b}, die gleich oder verschieden sind, unabhängig voneinander für gesättigte oder ungesättigte, lineare oder verzweigte Kohlenwasserstoffgruppen mit einer linearen Kette aus 2 bis 11 Kohlenstoffatomen, vorzugsweise 3 bis 8 Kohlenstoffatomen, stehen;
mit der Maßgabe, dass dann, wenn s gleich 2 ist, mindestens eine der Gruppen R oder R' für eine lineare oder verzweigte (C₁-C₅)-Alkylgruppe steht.

6. Verwendung nach einem der vorhergehenden Ansprüche, wobei der Diester bzw. die Diester der Formel (I) in einem Gehalt zwischen 5 und 25 Gew.-%, bezogen auf das Gesamtgewicht der Zusammensetzung, und spezieller zwischen 10 und 25 Gew.-% vorliegt bzw. vorliegen.

7. Verwendung nach einem der vorhergehenden Ansprüche, wobei die Zusammensetzung außerdem mindestens ein Additiv umfasst, das aus Kohlenwasserstofffluiden mit einem Siedepunkt größer als oder gleich 50 °C, Radikalinhibitoren, Reibungsmodifikatoren, Detergentien, Verschleißschutzadditiven, Höchstdruckadditiven, Dispergiermitteln, Antioxidantien, Pourpoint-Verbesserern, Antischaummitteln und Mischungen davon ausgewählt ist.

8. Verfahren zum Kühlen und Schmieren eines Antriebssystems eines Elektro- oder Hybridfahrzeugs, umfassend mindestens einen Schritt des Inkontaktbringens mindestens eines mechanischen Teils des Systems, insbesondere mindestens einer Batteriezelle, insbesondere einer Lithiumionenbatterie oder Nickel-Cadmium-Batterie, mit einer Zusammensetzung gemäß einem der Ansprüche 1 bis 7.

9. Verfahren nach dem vorhergehenden Anspruch, **dadurch gekennzeichnet, dass** es sich bei dem mindestens einen mechanischen Teil um mindestens eine Batterie handelt, die statisch oder mit Umlauf in die Zusammensetzung eingetaucht oder teilweise eingetaucht ist, oder die Zusammensetzung durch Injektion, Strahl, durch Sprühen oder auch durch Bildung eines Nebels aus der Zusammensetzung unter Druck und durch Schwerkraft auf die Batterie mit den Batterien in direkten Kontakt gebracht wird.

10. Verwendung eines Diesters der Formel (I) gemäß einem der Ansprüche 1, 5 und 6, in einer Zusammensetzung zum Kühlen und Schmieren eines Antriebssystems eines Elektro- oder Hybridfahrzeugs, die mindestens ein Grundöl umfasst, zur Verlängerung des Entleerungsintervalls des Antriebssystems, insbesondere seiner Batterie, wobei der Diester bzw. die Diester der Formel (I) in einem Gehalt zwischen 1 und 25 Gew.-%, bezogen auf das Gesamtgewicht der Zusammensetzung, vorliegt bzw. vorliegen.

11. Verwendung einer Zusammensetzung zum Kühlen und Schmieren eines Antriebssystems eines Elektro- oder Hybridfahrzeugs, wobei die Zusammensetzung mindestens Folgendes umfasst:
(i) mindestens ein Grundöl und
(ii) mindestens einen Diester der Formel (I), der von dem Grundöl (i) verschieden ist:
R^{a}-C(O)-O-([C(R)₂]ₙ-O)ₛ-C(O)-R^{b} (I)
wobei:
- die Variablen R unabhängig voneinander für ein Wasserstoffatom oder eine lineare oder verzweigte (C₁-C₅)-Alkylgruppe, speziell eine Methyl-, Ethyl- oder Propylgruppe, insbesondere eine Methylgruppe, stehen;
- s gleich 1 oder 2 ist;
- n gleich 1, 2 oder 3 ist; wobei es sich versteht, dass dann, wenn s von 1 verschieden ist, die Variablen n gleich oder verschieden sein können; und
- R^{a} und R^{b}, die gleich oder verschieden sind, unabhängig voneinander für gesättigte oder ungesättigte, lineare oder verzweigte Kohlenwasserstoffgruppen mit einer linearen Kette aus 2 bis 11 Kohlenstoffatomen, vorzugsweise 3 bis 8 Kohlenstoffatomen, stehen;
wobei der Diester durch eine Veresterungsreaktion zwischen Diethylenglykol und einer oder mehreren Carbonsäuren R^{a}-COOH und R^{b}-COOH erhalten wird,
vorzugsweise der Diester oder das Diestergemisch durch eine Veresterungsreaktion zwischen Diethylenglykol und Nonansäure erhalten wird;
wobei der Diester bzw. die Diester der Formel (I) in einem Gehalt zwischen 1 und 25 Gew.-%, bezogen auf das Gesamtgewicht der Zusammensetzung, vorliegt bzw. vorliegen.

12. Verwendung einer Zusammensetzung zum Kühlen und Schmieren eines Antriebssystems eines Elektro- oder Hybridfahrzeugs, wobei die Zusammensetzung mindestens Folgendes umfasst:
(i) mindestens ein Grundöl und
(ii) mindestens einen Diester der Formel (I), der von dem Grundöl (i) verschieden ist:
R^{a}-C(O)-O-([C(R)₂]ₙ-O)ₛ-C(O)-R^{b} (I)
wobei:
- die Variablen R unabhängig voneinander für ein Wasserstoffatom oder eine lineare oder verzweigte (C₁-C₅)-Alkylgruppe, speziell eine Methyl-, Ethyl- oder Propylgruppe, insbesondere eine Methylgruppe, stehen;
- s gleich 1 oder 2 ist;
- n gleich 1, 2 oder 3 ist; wobei es sich versteht, dass dann, wenn s von 1 verschieden ist, die Variablen n gleich oder verschieden sein können; und
- R^{a} und R^{b}, die gleich oder verschieden sind, unabhängig voneinander für gesättigte oder ungesättigte, lineare oder verzweigte Kohlenwasserstoffgruppen mit einer linearen Kette aus 2 bis 11 Kohlenstoffatomen, vorzugsweise 3 bis 8 Kohlenstoffatomen, stehen;
wobei der Diester durch eine Veresterungsreaktion zwischen Neopentylglykol und einer oder mehreren Carbonsäuren R^{a}-COOH und R^{b}-COOH erhalten wird,
vorzugsweise der Diester oder das Diestergemisch durch eine Veresterungsreaktion zwischen Neopentylglykol und Nonansäure, Isononansäure, 2-Ethylhexansäure und Gemischen davon erhalten wird;
wobei der Diester bzw. die Diester der Formel (I) in einem Gehalt zwischen 1 und 25 Gew.-%, bezogen auf das Gesamtgewicht der Zusammensetzung, vorliegt bzw. vorliegen.

## Claims

1. Use, for cooling and lubricating a propulsion system of an electric or hybrid vehicle, of a composition comprising at least:
(i) at least one base oil; and
(ii) at least one diester of formula (I), distinct from the base oil (i):
R^{a}-C(O)-O-([C(R)₂]ₙ-O)ₛ-C(O)-R^{b} (I)
in which:
- R represent, independently of one another, a hydrogen atom or a linear or branched (C₁-C₅) alkyl group, especially a methyl, ethyl or propyl, in particular methyl, group;
- s has the value 1 or 2;
- n has the value 1, 2 or 3; it being understood that, when s is other than 1, n can be identical or different; and
- R^{a} and R^{b}, which are identical or different, represent, independently of each other, saturated or unsaturated and linear or branched hydrocarbon groups exhibiting a linear sequence of 2 to 11 carbon atoms, preferably of 3 to 8 carbon atoms;
with the proviso that, when s has the value 2 and n, which are identical, have the value 2, at least one of the R groups represents a linear or branched (C₁-C₅)alkyl group; and
with the proviso that, when s has the value 1 and n has the value 3, at least one of the R groups bonded to the carbon in the beta position with respect to the oxygen atoms of the ester functions represents a hydrogen atom; the diester(s) of formula (I) being present in a content of between 1% and 25% by weight, with respect to the total weight of the composition.

2. Use according to the preceding claim, **characterized in that** the base oil exhibits a kinematic viscosity, measured at 100°C according to Standard ASTM D445, ranging from 1.5 to 8 mm²/s, in particular from 1.5 to 6.1 mm²/s, more particularly from 1.5 to 4.1 mm²/s, more particularly still from 1.5 to 2.1 mm²/s.

3. Use according to Claim 1 or 2, in which the base oil is chosen from synthetic oils, such as certain esters of carboxylic acids and of alcohols, poly-α-olefins and polyalkylene glycols obtained by polymerization or copolymerization of alkylene oxides comprising from 2 to 8 carbon atoms, in particular from 2 to 4 carbon atoms.

4. Use according to any one of the preceding claims, **characterized in that** the composition comprises from 60% to 99.5% by weight, preferably from 70% to 98%, more preferentially still from 80% to 98%, advantageously from 90% to 97%, by weight, of base oil or mixture of base oils.

5. Use according to any one of the preceding claims, in which the diester of formula (I) is a diester of formula (I'):
R^{a}-C(O)-O-([C(R)₂]ₙ-O)-([C(R')₂]ₘ-O)ₛ₋₂-C(O)-R^{b} (I')
in which:
- R and R' represent, independently of one another, a hydrogen atom or a linear or branched (C₁-C₅) alkyl group, especially a methyl, ethyl or propyl group, in particular a methyl group;
- s has the value 1 or 2;
- n has the value 2;
- m has the value 2;
- R^{a} and R^{b}, which are identical or different, represent, independently of each other, saturated or unsaturated and linear or branched hydrocarbon groups exhibiting a linear sequence of 2 to 11 carbon atoms, preferably of 3 to 8 carbon atoms;
with the proviso that, when s has the value 2, at least one of the R or R' groups represents a linear or branched (C₁-C₅)alkyl group.

6. Use according to any one of the preceding claims, in which the diester(s) of formula (I) are present in a content of between 5% and 25% by weight, with respect to the total weight of the composition, and more particularly between 10% and 25% by weight.

7. Use according to any one of the preceding claims, in which the composition additionally comprises at least one additive chosen from hydrocarbon fluids having a boiling point of greater than or equal to 50°C, radical inhibitors, friction modifiers, detergents, antiwear additives, extreme-pressure additives, dispersants, antioxidants, pour point improvers, antifoaming agents and their mixtures.

8. Process for the cooling and lubrication of a propulsion system of an electric or hybrid vehicle comprising at least one stage of bringing at least one mechanical part of said system, in particular at least one battery cell, in particular of a lithium-ion or nickel-cadmium battery, into contact with a composition as defined in any one of Claims 1 to 7.

9. Process according to the preceding claim, **characterized in that** said at least one mechanical part is at least one battery, in immersion or semi-immersion, static or in circulation, in said composition or said composition is brought into direct contact with the batteries by injection, by jet, by spraying or also by formation of a mist starting from said composition under pressure and by gravity on the battery.

10. Use of a diester of formula (I) as defined according to any one of Claims 1, 5 and 6, in a composition for the cooling and lubrication of a propulsion system of an electric or hybrid vehicle, comprising at least one base oil, for increasing the interval of emptying of the propulsion system, in particular of its battery, the diester(s) of formula (I) being present in a content of between 1% and 25% by weight, with respect to the total weight of the composition.

11. Use, for cooling and lubricating a propulsion system of an electric or hybrid vehicle, of a composition comprising at least:
(i) at least one base oil; and
(ii) at least one diester of formula (I), distinct from the base oil (i):
R^{a}-C(O)-O-([C(R)₂]ₙ-O)ₛ-C(O)-R^{b} (I)
in which:
- R represent, independently of one another, a hydrogen atom or a linear or branched (C₁-C₅) alkyl group, especially a methyl, ethyl or propyl, in particular methyl, group;
- s has the value 1 or 2;
- n has the value 1, 2 or 3; it being understood that, when s is other than 1, n can be identical or different; and
- R^{a} and R^{b}, which are identical or different, represent, independently of each other, saturated or unsaturated and linear or branched hydrocarbon groups exhibiting a linear sequence of 2 to 11 carbon atoms, preferably of 3 to 8 carbon atoms;
said diester being obtained by an esterification reaction between diethylene glycol and one or more carboxylic acids R^{a}-COOH and R^{B}-COOH,
the diester or diester mixture preferably being obtained by an esterification reaction between diethylene glycol and nonanoic acid;
the diester(s) of formula (I) being present in a content of between 1% and 25% by weight, with respect to the total weight of the composition.

12. Use, for cooling and lubricating a propulsion system of an electric or hybrid vehicle, of a composition comprising at least:
(i) at least one base oil; and
(ii) at least one diester of formula (I), distinct from the base oil (i):
R^{a}-C(O)-O-([C(R)₂]ₙ-O)ₛ-C(O)-R^{b} (I)
in which:
- R represent, independently of one another, a hydrogen atom or a linear or branched (C₁-C₅) alkyl group, especially a methyl, ethyl or propyl, in particular methyl, group;
- s has the value 1 or 2;
- n has the value 1, 2 or 3; it being understood that, when s is other than 1, n can be identical or different; and
- R^{a} and R^{b}, which are identical or different, represent, independently of each other, saturated or unsaturated and linear or branched hydrocarbon groups exhibiting a linear sequence of 2 to 11 carbon atoms, preferably of 3 to 8 carbon atoms;
said diester being obtained by an esterification reaction between neopentyl glycol and one or more carboxylic acids R^{a}-COOH and R^{b}-COOH,
the diester or diester mixture preferably being obtained by an esterification reaction between neopentyl glycol and nonanoic acid, isononanoic acid, 2-ethylhexanoic acid and their mixtures;
the diester(s) of formula (I) being present in a content of between 1% and 25% by weight, with respect to the total weight of the composition.
